# EUROPEAN PATENT APPLICATION

(11) **EP 4 539 510 A1**
(43) Date of publication of application: **16.04.2025**
(21) Application number: 23829991.1
(22) Date of filing: 15.06.2023
(51) Int. Cl.: H04W 4/02

(54) **INFORMATION SENDING METHOD AND APPARATUS**

(30) Priority: 29.06.2022 CN 202210757240
(71) Applicant: Huawei Technologies Co., Ltd., Shenzhen, Guangdong 518129 (CN)
(72) Inventor: ZHANG, Zheng, Shenzhen, Guangdong 518129 (CN); LI, Fei, Shenzhen, Guangdong 518129 (CN); HE, Chengdong, Shenzhen, Guangdong 518129 (CN); YU, Xiaofan, Shenzhen, Guangdong 518129 (CN)
(74) Representative: Pfenning, Meinig & Partner mbB
(86) International application number: PCT/CN2023/100499
(87) International publication number: WO 2024/001811

(57) **Abstract**

This application provides an information sending method and an apparatus. The method includes: A first device receives an identifier of a first terminal device; the first device obtains first location service information, where the first location service information can indicate a terminal device whose location can be provided; and after determining, based on the first location service information and the identifier of the first terminal device, that a location of the first terminal device can be provided, the first device sends information corresponding to the location of the first terminal device. In this way, leakage of the location of the terminal device can be maximally avoided.

## Description

This application claims priority to Chinese Patent Application No. 202210757240.0, filed with the China National Intellectual Property Administration on June 29, 2022 and entitled "INFORMATION SENDING METHOD AND APPARATUS", which is incorporated herein by reference in its entirety.

### TECHNICAL FIELD

This application relates to the field of communication technologies, and in particular, to an information sending method and an apparatus.

### BACKGROUND

The 3rd Generation Partnership Project (3rd generation partnership project, 3GPP) defines location services (location services, LCSs) as 5th generation mobile communication (5th generation mobile communication technology, 5G) LCSs.

In a 5G LCS service procedure, a network client may request location information of a terminal device (user equipment, UE) from a gateway mobile location center (gateway mobile location center, GMLC).

However, the GMLC mainly considers a correspondence between an LCS request and each of the network client and the UE. For example, in an LCS request, when an LCS privacy profile (privacy profile) identifies that access of the network client is allowed, and a location privacy indication (location privacy indication, LPI) indicator of the UE identifies that the network client is allowed to request an LCS of the UE, the network client may request location information of a UE in any region. Therefore, a determining process in which the GMLC performs privacy detection on the network client and the UE is coarse-grained, causing leakage of a location of the UE.

### SUMMARY

This application provides an information sending method and an apparatus, to maximally avoid leakage of a location of a terminal device.

According to a first aspect, this application provides an information sending method, including:

A first device receives an identifier of a first terminal device.

The first device obtains first location service information, where the first location service information can indicate a terminal device whose location can be provided.

After determining, based on the first location service information and the identifier of the first terminal device, that a location of the first terminal device can be provided, the first device sends information corresponding to the location of the first terminal device.

According to the information sending method provided in the first aspect, the first device receives the identifier of the first terminal device, so that the first device can determine, based on the identifier of the first terminal device, a terminal device on which a location service is requested to be executed. For example, when a location request device requests a location service of a terminal device/some terminal devices, the first device may know, based on the identifier of the first terminal device, that a location service of the first terminal device is requested.

After receiving the identifier of the first terminal device, the first device obtains first location service information, where the first location service information can indicate a terminal device whose location can be provided, so that the first device can determine, based on the first location service information, the terminal device whose location can be provided. After determining, based on the first location service information and the identifier of the first terminal device, that the location of the first terminal device can be provided, the first device sends the information corresponding to the location of the first terminal device. For example, if the first terminal device belongs to the terminal device, the location of the first terminal device can be provided. Alternatively, the first device determines, based on the first location service information, a gateway mobile location center that can provide a location service. If the first terminal device is a terminal device whose location of the terminal device can be provided by the gateway mobile location center, the location of the first terminal device can be provided.

Therefore, the first device can determine, based on the first location service information and the identifier of the first terminal device, whether the location of the terminal device can be provided for the first terminal device.

When the location of the first terminal device can be provided for the first terminal device, the first device sends the information corresponding to the location of the first terminal device. When the location of the first terminal device cannot be provided for the first terminal device, the first device does not send the information corresponding to the location of the first terminal device.

For example, when the location request device requests to obtain the location of the first terminal device, the first device determines, by using the first location service information, whether the location of the terminal device can be provided for the first terminal device. This is equivalent to that the first device may determine whether the location request device is authorized to request the location of the first terminal device. When the location request device is authorized, the first device may provide the location of the first terminal device to the location request device. When the location request device is not authorized, the first device does not provide the location of the first terminal device to the location request device.

In this way, privacy verification for a terminal device is implemented, and leakage of a location of the terminal device is avoided.

In a possible design, the first device is an access and mobility management function entity.

That a first device receives an identifier of a first terminal device includes: The access and mobility management function entity receives the identifier of the first terminal device from the gateway mobile location center.

That the first device sends information corresponding to the location of the first terminal device includes: The access and mobility management function entity sends location information of the first terminal device to the gateway mobile location center.

Therefore, the access and mobility management function entity may be used as the first device. After the gateway mobile location center requests the access and mobility management function entity to execute a location service on the first terminal device, and before the access and mobility management function entity sends the location information of the first terminal device to the gateway mobile location center, the access and mobility management function entity may determine, based on the first location service information and the identifier of the first terminal device, whether the location of the terminal device can be provided for the first terminal device.

When the location of the first terminal device can be provided for the first terminal device, the access and mobility management function entity may continue to perform a subsequent process of obtaining the location information of the first terminal device via a location management function entity, and after obtaining the location information of the first terminal device, the access and mobility management function entity may send the location information of the first terminal device to the gateway mobile location center.

When the location of the first terminal device can be provided for the first terminal device, the access and mobility management function entity may not continue to perform a subsequent process of obtaining the location information of the first terminal device via a location management function entity. Even if the location information of the first terminal device is obtained, the access and mobility management function entity does not send the location information of the first terminal device to the gateway mobile location center, so that the gateway mobile location center does not send the location information of the first terminal device to the location request device.

In this way, the access and mobility management function entity may be used as a network element for determining whether a location of a terminal device can be provided, to ensure that the location of the terminal device is authorizedly/properly obtained, thereby maximally avoiding leakage of the location of the terminal device.

In a possible design, the first device is a unified data management entity.

That a first device receives an identifier of a first terminal device includes: The unified data management entity receives the identifier of the first terminal device from a gateway mobile location center.

That the first device sends information corresponding to the location of the first terminal device includes: The unified data management entity sends, to the gateway mobile location center, information about an access and mobility management function entity serving the first terminal device, where the information about the access and mobility management function entity serving the first terminal device is used by the gateway mobile location center to request location information of the first terminal device.

Therefore, the unified data management entity may be used as the first device. After the gateway mobile location center requests, from the unified data management entity, the information about the access and mobility management function entity serving the first terminal device, the unified data management entity may selectively send, to the gateway mobile location center based on the foregoing implementation process, the information about the access and mobility management function entity serving the first terminal device, so that the gateway mobile location center can properly/authorizedly send the location information of the first terminal device to a location obtaining device, and leakage of a location of a terminal device can be maximally avoided.

In a possible design, that the first device obtains first location service information includes:

The first device obtains, based on the gateway mobile location center and a preconfigured correspondence between each gateway mobile location center and corresponding location service information, the first location service information corresponding to the gateway mobile location center.

Alternatively, the first device obtains the first location service information from a certificate of the gateway mobile location center.

Alternatively, the first device obtains the first location service information from an access token of the gateway mobile location center.

Alternatively, the first device receives the first location service information from the gateway mobile location center.

In this way, a plurality of channels are provided for the access and mobility management function entity or the unified data management entity to obtain the first location service information, to ensure that the access and mobility management function entity or the unified data management entity can obtain the first location service information, and specific implementations of obtaining the first location service information are enriched.

In a possible design, the first device is a gateway mobile location center.

That a first device receives an identifier of a first terminal device includes: The gateway mobile location center receives the identifier of the first terminal device from a location request device.

That the first device sends information corresponding to the location of the terminal device includes: The gateway mobile location center sends location information of the first terminal device to the location request device.

Therefore, the gateway mobile location center may be used as the first device. After the location request device requests the gateway mobile location center to execute a location service on the first terminal device, and before the gateway mobile location center sends the first terminal device to the location request device, the gateway mobile location center may selectively send the location information of the first terminal device to the location request device based on the foregoing implementation process, so that the location request device can properly/authorizedly obtain the location information of the first terminal device, and leakage of a location of a terminal device can be maximally avoided.

In a possible design, that the first device obtains first location service information includes:

The gateway mobile location center obtains, based on the gateway mobile location center and a preconfigured correspondence between each gateway mobile location center and corresponding location service information, the first location service information corresponding to the gateway mobile location center.

Alternatively, the gateway mobile location center obtains the first location service information from a certificate of the location request device.

Alternatively, the gateway mobile location center receives the first location service information from the location request device.

In this way, a plurality of channels are provided for the gateway mobile location center to obtain the first location service information, to ensure that the gateway mobile location center can obtain the first location service information, and specific implementations of obtaining the first location service information are enriched.

In a possible design, the first location service information corresponds to a terminal device identifier set, and the terminal device identifier set includes an identifier of a terminal device whose location can be provided.

The terminal device identifier set includes the identifier of the first terminal device.

In this way, it is considered that the terminal device that is identified by the first location service information and whose location can be provided is definite/fixed. Therefore, the first location service information may use the terminal device identifier set to identify an identifier of each terminal device whose location can be provided, and representation forms of the first location service information are enriched.

In a possible design, the terminal device identifier set is obtained based on the first location service information and a preconfigured matching relationship between location service information and a corresponding terminal device identifier set.

Alternatively, the terminal device identifier set is obtained from the access token of the gateway mobile location center corresponding to the first location service information.

In this way, a plurality of channels are provided for the first device to obtain the terminal device identifier set, to ensure that the first device can obtain the terminal device identifier set, and specific implementations of obtaining the terminal device identifier set are enriched.

In a possible design, the first location service information corresponds to a first location service identifier, and the first location service identifier identifies a location service region that corresponds to the first device and in which a location of a terminal device can be provided.

The method further includes:
The first device obtains a second location service identifier from subscription information of the first terminal device based on the identifier of the first terminal device, where the second location service identifier identifies a location service region in which the location of the first terminal device can be provided.

That the first device determines, based on the first location service information and the identifier of the first terminal device, that a location of the first terminal device can be provided includes:

When the first location service identifier is the same as the second location service identifier, the first device determines that the location of the first terminal device can be provided.

In this way, it is considered that a gateway mobile location center that is identified by the first location service information and that can provide the location of the first terminal device is definite/fixed, and a terminal device whose location of the terminal device can be provided by the gateway mobile location center identified by the first location service information is also definite/fixed. Based on this, the first location service information may use the first location service identifier to identify the location service region in which the location of the terminal device can be provided, and representation forms of the first location service information are enriched.

According to a second aspect, this application provides an information sending method, including:

A unified data management entity receives first location service information from a gateway mobile location center or an access and mobility management function entity, where the first location service information can indicate a terminal device whose location can be provided.

The unified data management entity obtains a terminal device identifier set based on the first location service information and a preconfigured matching relationship between location service information and a corresponding terminal device identifier set, where the terminal device identifier set includes an identifier of a terminal device whose location can be provided.

The unified data management entity sends the terminal device identifier set to the gateway mobile location center or the access and mobility management function entity.

According to the information sending method provided in the second aspect, the unified data management entity may receive the first location service information from the gateway mobile location center or the access and mobility management function entity. The unified data management entity may obtain the preconfigured matching relationship between location service information and a corresponding terminal device identifier set. Therefore, the unified data management entity may determine, based on the matching relationship, the terminal device identifier set corresponding to the first location service information. The unified data management entity may provide the terminal device identifier set to the gateway mobile location center or the access and mobility management function entity, so that the gateway mobile location center or the access and mobility management function entity can determine whether the terminal device identifier set includes an identifier of a first terminal device.

When the terminal device identifier set includes the first terminal device, the gateway mobile location center may send location information of the first terminal device to a location request device, or the access and mobility management function entity may send location information of the first terminal device to the gateway mobile location center.

When the terminal device identifier set does not include the first terminal device, the gateway mobile location center or the access and mobility management function entity does not send location information of the first terminal device.

In conclusion, the unified data management entity may provide the terminal device identifier set to the gateway mobile location center or the access and mobility management function entity, so that the gateway mobile location center or the access and mobility management function entity can ensure that a location of a terminal device is authorizedly/properly obtained, thereby maximally avoiding leakage of the location of the terminal device.

According to a third aspect, this application provides an information sending method, including:

A unified data management entity receives an identifier of a first terminal device from a gateway mobile location center or an access and mobility management function entity.

The unified data management entity determines subscription information of the first terminal device based on the identifier of the first terminal device.

The unified data management entity obtains a second location service identifier from subscription information of the first terminal device, where the second location service identifier identifies a location service region in which a location of the first terminal device can be provided.

The unified data management entity sends the second location service identifier to the gateway mobile location center or the access and mobility management function entity.

According to the information sending method provided in the third aspect, the unified data management entity may receive the identifier of the first terminal device from the gateway mobile location center or the access and mobility management function entity. The unified data management entity may obtain subscription information of each terminal device, and a location service identifier of each terminal device is pre-stored in the subscription information of each terminal device. The location service identifier of each terminal device identifies a location service region in which a location of each terminal device can be provided. Therefore, the unified data management entity may determine the subscription information of the first terminal device that corresponds to the identifier of the first terminal device. The unified data management entity may obtain the second location service identifier of the first terminal device from the subscription information of the first device, where the second location service identifier identifies the location service region in which the location of the first terminal device can be provided. The unified data management entity may send the second location service identifier of the first terminal device to the gateway mobile location center or the access and mobility management function entity, so that the gateway mobile location center or the access and mobility management function entity can determine whether the first location service identifier is the same as the second location service identifier.

When the first location service identifier is the same as the second location service identifier, the gateway mobile location center may send location information of the first terminal device to a location request device, or the access and mobility management function entity may send location information of the first terminal device to the gateway mobile location center.

When the first location service identifier is different from the second location service identifier, the gateway mobile location center or the access and mobility management function entity does not send location information of the first terminal device.

**In** conclusion, the unified data management entity may provide, to the gateway mobile location center or the access and mobility management function entity, a location service identifier corresponding to a terminal device on which a location service is requested to be executed, so that the gateway mobile location center or the access and mobility management function entity can ensure that a location of the terminal device is authorizedly/properly obtained, thereby maximally avoiding leakage of the location of the terminal device.

According to a fourth aspect, this application provides an information sending method, including:

A network repository function entity receives, from a gateway mobile location center, a request for applying for an access token of the gateway mobile location center.

The network repository function entity obtains first location service information, where the first location service information can indicate a terminal device whose location can be provided.

The network repository function entity sends the access token of the gateway mobile location center to the gateway mobile location center, where the access token of the gateway mobile location center includes the first location service information.

According to the information sending method provided in the fourth aspect, the network repository function entity may implement the foregoing process of applying for the access token of the gateway mobile location center, so that the first location service information is pre-stored in the access token of the gateway mobile location center. In this way, it is convenient for a first device (for example, an access and mobility management function entity or a unified data management entity) to obtain the first location service information from the access token of the gateway mobile location center, so that the first device can determine whether a location of a terminal device on which a location service is requested to be executed can be provided, to ensure that a process of obtaining location information of the terminal device is controllable, and leakage of the location of the terminal device can be maximally avoided.

In a possible design, that the network repository function entity obtains first location service information includes:

The network repository function entity obtains the first location service information from a certificate of the gateway mobile location center.

Alternatively, the network repository function entity obtains the first location service information from a registration profile of the gateway mobile location center.

Alternatively, the network repository function entity receives the first location service information from the gateway mobile location center.

In this way, a plurality of channels are provided for the network repository function entity to obtain the first location service information, to ensure that the network repository function entity can obtain the first location service information, and specific implementations of obtaining the first location service information are enriched.

In a possible design, before the network repository function entity obtains the first location service information, the method further includes:

The network repository function entity receives, from the gateway mobile location center, a request for registering the gateway mobile location center.

The network repository function entity obtains second location service information, where the second location service information can indicate a terminal device whose location can be provided.

The network repository function entity writes the second location service information into the registration profile of the gateway mobile location center.

In this way, when the network repository function entity obtains the first location service information from the registration profile of the gateway mobile location center, the gateway mobile location center may request the network repository function entity to register the gateway mobile location center in advance, so that the first location service information is pre-stored in the registration profile of the gateway mobile location center. Therefore, this ensures that the network repository function entity can obtain the first location service information from the registration profile of the gateway mobile location center.

In a possible design, that the network repository function entity obtains second location service information includes:

The network repository function entity receives the second location service information from the gateway mobile location center.

Alternatively, the network repository function entity obtains the second location service information from the certificate of the gateway mobile location center.

In this way, when the network repository function entity writes the first location service information into the registration profile of the gateway mobile location center, a plurality of channels are provided for the network repository function entity to obtain the first location service information, to ensure that the network repository function entity can obtain the first location service information, and specific implementations of obtaining the first location service information are enriched.

In a possible design, the first location service information corresponds to a terminal device identifier set, the terminal device identifier set includes an identifier of a terminal device whose location can be provided, and the access token of the gateway mobile location center includes the terminal device identifier set; and/or

the first location service information corresponds to a first location service identifier, the first location service identifier identifies a location service region that corresponds to the first device and in which a location of a terminal device can be provided, and the access token of the gateway mobile location center includes the first location service identifier.

In this way, a plurality of expression manners are provided for the first location service information written by the network repository function entity into the access token of the gateway mobile location center, to ensure that the first device can obtain the first location service information.

According to a fifth aspect, this application provides an information sending method, including:

An access and mobility management function entity receives, from a location management function entity, a request for obtaining a related positioning parameter of a second terminal device or sending location information of a second terminal device.

The access and mobility management function entity obtains first verification information of the second terminal device based on the request.

When the first verification information of the second terminal device is the same as second verification information of the second terminal device in the access and mobility management function entity, the access and mobility management function entity sends the related positioning parameter of the second terminal device or the location information of the second terminal device.

According to the information sending method provided in the fifth aspect, the access and mobility management function entity receives a request from the location management function entity, to determine, based on the request, that a terminal device on which a location service is requested to be executed is the second terminal device.

After receiving the request, the access and mobility management function entity may obtain the first verification information of the second terminal device, where the first verification information can uniquely identify the second terminal device.

The access and mobility management function entity pre-stores second verification information of a terminal devices or terminal devices whose location information needs to be determined by the access and mobility management function entity for the gateway mobile location center. Therefore, the access and mobility management function entity may determine whether the first verification information of the second terminal device is the same as the second verification information of the second terminal device.

When the first verification information of the second terminal device is the same as the second verification information of the second terminal device, the access and mobility management function entity may determine that the second terminal device is included in the terminal device whose location information needs to be determined by the access and mobility management function entity for the gateway mobile location center.

In this way, the access and mobility management function entity may request the access and mobility management function entity to obtain the related positioning parameter of the second terminal device from the second terminal device, or the access and mobility management function entity may request the access and mobility management function entity to forward the location information of the second terminal device to the gateway mobile location center.

When the first verification information of the second terminal device is different from the second verification information of the second terminal device, the access and mobility management function entity may determine that the second terminal device is not included in the terminal device whose location information is determined by the access and mobility management function entity.

In this way, the access and mobility management function entity may reject to respond to the request sent by the access and mobility management function entity.

In conclusion, the access and mobility management function entity pre-stores the verification information of the terminal device whose location information needs to be determined by the access and mobility management function entity for the gateway mobile location center. After receiving the request sent by the location management function entity, the access and mobility management function entity may check whether verification information of a terminal device corresponding to the request is the same as the pre-stored verification information of the terminal device, to determine that the terminal device is included in the terminal devices whose location information needs to be determined by the access and mobility management function entity, so that an invalid request initiated by the location management function entity can be shielded. In this way, a process of determining and forwarding the location information of the terminal device is controllable, thereby avoiding leakage of the location of the terminal device caused by a malicious behavior of the access and mobility management function entity, and providing a new implementation for privacy detection of the terminal device. This reduces a risk of disclosing the location of the UE after the access and mobility management function entity is attacked/controlled.

In a possible design, verification information includes an identifier and/or a context identifier of the second terminal device.

In a possible design, before the access and mobility management function entity receives, from the location management function entity, the request for obtaining the related positioning parameter of the second terminal device or sending the location information of the second terminal device, the method further includes:

The access and mobility management function entity marks the second verification information of the second terminal device based on the second terminal device.

The access and mobility management function entity sends the identifier of the second terminal device to the location management function entity.

The access and mobility management function entity receives, from the location management function entity, the request for obtaining the related positioning parameter of the second terminal device or sending the location information of the second terminal device, where the request includes the identifier of the second terminal device.

The access and mobility management function entity obtains the first verification information of the second terminal device and the second verification information of the second terminal device based on the identifier of the second terminal device, and determines whether the second verification information of the second terminal device is marked.

When the first verification information of the second terminal device is the same as second verification information of the second terminal device, and the second verification information of the second terminal device is marked, the access and mobility management function entity sends the related positioning parameter of the second terminal device or the location information of the second terminal device.

In this way, marking existing identifiers of the terminal device whose location information needs to be determined by the access and mobility management function entity for the gateway mobile location center provides a feasible implementation for the access and mobility management function entity to determine whether the second terminal device is included in the terminal devices whose location information needs to be determined by the access and mobility management function entity for the gateway mobile location center. This saves storage space of the access and mobility management function entity.

In a possible design, verification information includes a status identifier and/or a random number of the second terminal device.

In a possible design, before the access and mobility management function entity receives, from the location management function entity, the request for obtaining the related positioning parameter of the second terminal device or sending the location information of the second terminal device, the method further includes:

The access and mobility management function entity generates and stores the second verification information of the second terminal device based on the second terminal device.

The access and mobility management function entity sends an identifier of the second terminal device and the second verification information of the second terminal device to the location management function entity.

The access and mobility management function entity receives, from the location management function entity, the request for obtaining the related positioning parameter of the second terminal device or sending the location information of the second terminal device, where the request includes the identifier of the second terminal device and the first verification information of the second terminal device.

The access and mobility management function entity obtains the first verification information of the second terminal device from the request.

The access and mobility management function entity obtains the second verification information of the second terminal device from the AMF based on the identifier of the second terminal device.

When the first verification information of the second terminal device is the same as second verification information of the second terminal device, the access and mobility management function entity sends the related positioning parameter of the second terminal device or the location information of the second terminal device.

In this way, marking newly generated identifiers of the terminal device whose location information needs to be determined by the access and mobility management function entity for the gateway mobile location center provides another feasible implementation for the access and mobility management function entity to determine whether the second terminal device is included in the terminal device whose location information needs to be determined by the access and mobility management function entity for the gateway mobile location center.

In any one of the foregoing aspects and the possible designs of the aspects, the first location service information identifies at least one of the following: a home region of the gateway mobile location center, a network service region of the gateway mobile location center, a home operator of the gateway mobile location center, a home enterprise of the gateway mobile location center, a home region of a terminal device, a home enterprise of the terminal device, a service application of the terminal device, or an access network area of the terminal device.

In any one of the foregoing aspects and the possible designs of the aspects, the first location service information includes at least one of the following: an edge region identifier of the gateway mobile location center, an identifier of the gateway mobile location center, an instance identifier of the gateway mobile location center, an internet protocol address of the gateway mobile location center, a network port of the gateway mobile location center, an identifier of the access and mobility management function entity/unified data management entity, an identifier of a terminal device, an application identifier of the terminal device, an application function entity identifier, an application server identifier, a client identifier of the terminal device, a region identifier subscribed to by the terminal device with a home operator, a region identifier registered by the terminal device, a home enterprise identifier of the terminal device, an identifier of a network slice accessed by the terminal device, a tracking area identifier of the terminal device, an identifier of a cell region accessed by the terminal device, or geographic location information of the terminal device.

According to a sixth aspect, this application provides an information sending apparatus, including a module configured to perform the information sending method in any one of the foregoing aspects and the possible designs of the aspects.

According to a seventh aspect, this application provides an information sending system, including two or more network elements in the foregoing devices, where each network element is configured to perform the information sending method in any one of one aspect corresponding to the network element in the foregoing solutions and the possible designs of the aspect.

According to an eighth aspect, this application provides an information sending apparatus, including a memory and a processor. The memory is configured to store program instructions, and the processor is configured to invoke the program instructions in the memory, to enable the information sending apparatus to perform the information sending method in any one of the foregoing aspects and the possible designs of the aspects.

According to a ninth aspect, this application provides a chip, including: an interface circuit and a logic circuit, where the interface circuit is configured to receive a signal from another chip other than the chip and transmit the signal to the logic circuit, or send a signal from the logic circuit to another chip other than the chip; and the logic circuit is configured to implement the information sending method in any one of the foregoing aspects and the possible designs of the aspects.

According to a tenth aspect, this application provides a computer-readable storage medium, storing a computer program, where when the computer program is executed by a processor, an information sending apparatus is enabled to implement the information sending method in any one of the foregoing aspects and the possible designs of the aspects.

According to an eleventh aspect, this application provides a computer program product, including execution instructions, where the execution instructions are stored in a readable storage medium, at least one processor of an information sending apparatus may read the execution instructions from the readable storage medium, and the at least one processor executes the instructions to enable the information sending apparatus to implement the information sending method in any one of the foregoing aspects and the possible designs of the aspects.

### BRIEF DESCRIPTION OF DRAWINGS

FIG. 1 is a signaling exchange diagram of a 5G LCS service procedure in a conventional technology;
FIG. 2 to FIG. 4 are architectural diagrams of an LCS system according to an embodiment of this application;
FIG. 5 is a schematic flowchart of an information sending method according to an embodiment of this application;
FIG. 6 is a signaling exchange diagram of an information sending method according to an embodiment of this application;
FIG. 7 is a signaling exchange diagram of an information sending method according to an embodiment of this application;
FIG. 8 is a signaling exchange diagram of an information sending method according to an embodiment of this application;
FIG. 9 is a signaling exchange diagram of an information sending method according to an embodiment of this application;
FIG. 10 is a signaling exchange diagram of an information sending method according to an embodiment of this application;
FIG. 11 is a signaling exchange diagram of an information sending method according to an embodiment of this application;
FIG. 12 is a signaling exchange diagram of an information sending method according to an embodiment of this application;
FIG. 13 is a signaling exchange diagram of an information sending method according to an embodiment of this application; and
FIG. 14 is a diagram of a hardware structure of an information sending apparatus according to an embodiment of this application.

### DESCRIPTION OF EMBODIMENTS

In this application, "at least one" means one or more, and "a plurality of" means two or more. The term "and/or" describes an association relationship between associated objects and may indicate three relationships. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may represent: a, b, c, a combination of a and b, a combination of a and c, a combination of b and c, or a combination of a, b and c, where each of a, b, and c may be in a singular form or a plural form. In addition, terms "first" and "second" are merely used for a purpose of description, and shall not be understood as an indication or implication of relative importance. An orientation or a position relationship indicated by the term such as "center", "vertical", "horizontal", "up", "down", "left", "right", "front", or "back" is based on an orientation or a position relationship shown in the accompanying drawings, and is merely intended to facilitate description of this application and simplify description, but does not indicate or imply that a specified apparatus or element needs to have a specific orientation and be constructed and operated in a specific orientation. Therefore, such terms should not be construed as limitations to this application.

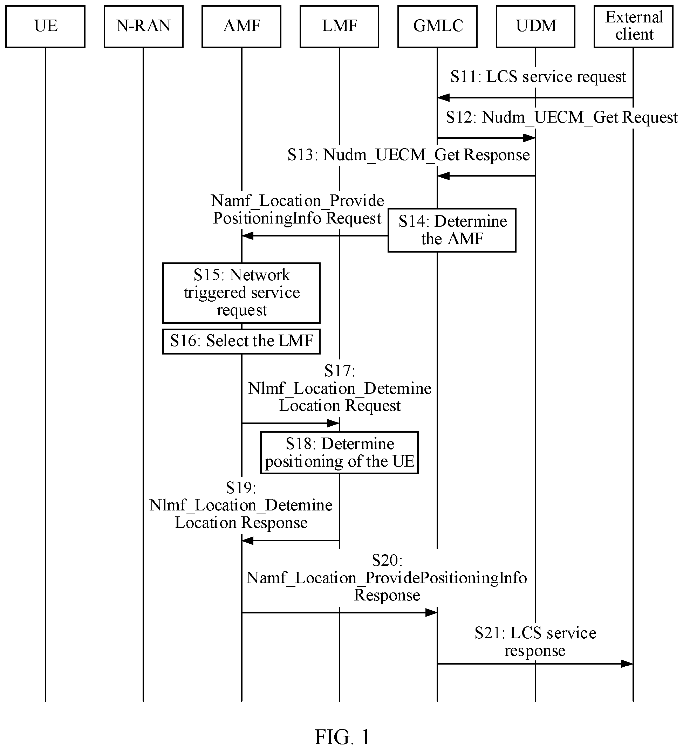

FIG. 1 is a signaling exchange diagram of a 5G LCS service procedure in a conventional technology.

As shown in FIG. 1, in the conventional technology, devices used in the 5G LCS service procedure may include a network client, a terminal device, and an LCS system.

The network client may also be referred to as an external client (external client), for example, an LCS client (client).

The terminal device may be a wireless terminal or a wired terminal. The wireless terminal may be a device that provides a user with voice and/or other service data connectivity, a handheld device with a wireless connection function, or another processing device connected to a wireless modem. The wireless terminal may communicate with one or more core networks through a radio access network (radio access network, RAN). The wireless terminal may be a mobile terminal, such as a mobile phone (also referred to as a "cellular" phone) and a computer with a mobile terminal, for example, may be a portable, pocket-sized, handheld, computer built-in, or vehicle-mounted mobile apparatus, which exchanges voice and/or data with the radio access network, for example, a device like a personal communications service (personal communications service, PCS) phone, a cordless phone, a session initiation protocol (session initiation protocol, SIP) phone, a wireless local loop (wireless local loop, WLL) station, a personal digital assistant (personal digital assistant, PDA), an uncrewed aerial vehicle, a wearable device, or a terminal in the internet of vehicles. The wireless terminal may also be referred to as a system, a subscriber unit (subscriber unit), a subscriber station (subscriber station), a mobile station (mobile station), a mobile (mobile), a remote station (remote station), a remote terminal (remote terminal), an access terminal (access terminal), a user terminal (user terminal), a user agent (user agent), a user device (user device or user equipment), or a user equipment (user equipment, UE), which is not limited herein. In addition, the terminal device may use a mobile operating system like an Android system, a Linux system, a Windows system, an iOS system, or a Harmony operating system (harmony operating system, Harmony OS). This is not limited in this application. For ease of description, in this application, an example in which the terminal device is a UE is used for representation.

The LCS system may include an access and mobility management function entity (access and mobility management function, AMF), a unified data management entity (unified data management, UDM), a location management function entity (location management function, LMF), a GMLC, an NG radio access network (N generation radio access network, NG-RAN, for example, a 5G-RAN), and another network element (that is, a network function entity (network function, NF)). In addition, the LCS system may further include a network repository function entity (network repository function, NRF).

The GMLC is a network element node first accessed by a network client in a 5G core network (5G core network, 5GC). The GMLC may be separately in communication connection with the AMF, the UDM, the NRF, and the network client. The NRF may be separately in communication connection with the GMLC and UDM.

The UDM is mainly responsible for managing user subscription context information. For example, the UDM stores information such as routing information and subscription information of each UE. The UDM may be separately in communication connection with the AMF, the GMLC, and the NRF.

The AMF is mainly responsible for user access and mobility management. For example, the AMF may serve as a communication bridge between the GMLC and the LMF and between the LMF and the UE. The AMF may be separately in communication connection with the NG-RAN, the UE, the LMF, the GMLC, and the UDM.

The LMF is mainly responsible for overall coordination and scheduling of resources needed for managing a location of the UE. For example, the LMF may obtain, from the GMLC via the AMF, a request for requesting an LCS of the UE, and may further obtain a related positioning parameter of the UE from the UE via the AMF.

The LMF is also responsible for calculating or verifying location information of the UE, such as a location, a speed, or corresponding precision.

The NG-RAN may provide a communication connection between the UE and the 5GC, for example, a communication connection between the UE and the AMF. The NG-RAN may be separately in communication connection with the AMF and the UE.

Still with reference to FIG. 1, in the conventional technology, the 5G LCS service procedure may include the following steps.

S11: The network client sends an LCS service request (LCS request) to the GMLC.

The LCS service request includes an identifier of the UE, for example, a subscription permanent identifier (subscription permanent identifier, SUPI) or a generic public subscription identifier (generic public subscription identifier, GPSI).

S12: The GMLC sends an Nudm_UECM_Get Request to the UDM.

The Nudm_UECM_Get Request includes the identifier of the UE.

S13: The UDM sends an Nudm_UECM_Get Response to the GMLC.

The Nudm_UECM_Get Response includes an LCS privacy profile and a network address of the AMF serving the UE.

After S13, the GMLC may perform privacy detection on the network client and the UE, which may include the following implementation process:
The GMLC determines, based on the LCS privacy profile, whether to allow access of the network client.

As a part of subscription information of the UE, the LCS privacy profile mainly includes four sets: Universal Class, Call/Session related Class, Call/Session unrelated Class, and PLMN Operator Class.

Therefore, the GMLC determines, at a granularity of the network client, whether the LCS privacy profile identifies that the access of the network client is allowed. For example, access of all LCS clients is allowed, additional user confirmation is needed for access, or access of a network client of an operator is allowed.

In addition, the GMLC may determine, based on an LPI indicator, whether to allow the network client to request an LCS of the UE.

The GMLC may obtain the identifier of the UE through an Nudm_SDM_Get service. The GMLC may determine the LPI indicator of the UE based on the identifier of the UE.

Therefore, the GMLC may determine whether the LPI indicator of the UE identifies that the network client is allowed to request the LCS of the UE.

In conclusion, after determining that the LCS privacy profile identifier identifies that the access of the network client is allowed and that the LPI indicator of the UE identifies that the network client is allowed to request the LCS of the UE, the GMLC may determine that the LCS of the UE can be provided for the network client.

S14: After determining that the GMLC can provide the LCS of the UE for the network client, the GMLC determines the AMF based on the network address of the AMF serving the UE, and sends an Namf_Location _ProvidePositioningInfo Request to the AMF.

The Namf_Location_ProvidePositioningInfo Request includes the identifier of the UE and an LCS-related parameter.

S15: When the UE is in a connection management idle (connection management, CM IDLE) state, the AMF initiates a network triggered service request (network triggered service request).

S16: The AMF may select an appropriate LMF based on a locally configured or obtained related information for selecting an LMF.

The related information for selecting an LMF may include but is not limited to at least one of a type of a network client, requested quality of service information (such as LCS precision and delay time), or an access type (like 3GPP access or non-3GPP access).

S17: The AMF sends an Nlmf_Location_DetemineLocation Request to the LMF.

The Nlmf_Location_DetemineLocation Request includes the LCS-related parameter.

S18: The LMF determines location information (positioning) of the UE.

S19: The LMF sends an Nlmf_Location_DetemineLocation Response to the AMF.

The Nlmf_Location _DetemineLocation Response includes the location information of the UE.

S20: The AMF sends an Namf_Location _ProvidePositioningInfo Response to the GMLC.

The Namf_ Location_ProvidePositioningInfo Response includes the location information of the UE.

S21: The GMLC sends an LCS service response (LCS response) to the network client.

The LCS service response includes the location information of the UE.

Based on the foregoing descriptions, the GMLC mainly considers a correspondence between the LCS request and each of the network client and the UE, but does not consider a matching relationship between the UE whose LCS is requested by the network client from the GMLC and a UE region in which the GMLC can provide LCSs of UEs, that is, whether the UE whose LCS is requested is in the UEs whose LCSs can be provided by the GMLC, and does not consider a matching relationship between the GMLC from which the network client requests the LCS of the UE and a GMLC region in which the LCS of the UE is provided, that is, whether the GMLC that receives the LCS of the UE from the network client is in GMLCs that can provide LCSs of the UE. Therefore, a determining process in which the GMLC performs privacy detection on the network client and the UE is coarse-grained, causing leakage of a location of the UE.

For a GMLC disposed in a region, the GMLC may provide the network client with location information of a UE located in the region. For security and other purposes, this type of GMLC cannot obtain location information of a UE located in another region other than this region in principle. However, in the related solution based on the embodiment in FIG. 1, obtaining location information of a UE located in another region by this type of GMLC cannot be avoided. As a result, the location information of the UE located in the another region is prone to be unauthorizedly obtained, causing leakage of a location of the UE.

In addition, if the GMLC is maliciously controlled, it is easy to bypass the foregoing determining process in which the GMLC performs privacy detection on the network client and the UE. For example, location information of any UE may be requested through an open interface (for example, a service-based interface (service-based interface, SBI interface)) in a core network area. As a result, the location information of any UE is prone to be unauthorizedly obtained, causing leakage of locations of UEs in a large range.

To resolve the foregoing problem, this application provides an information sending method, so that LCS information may be added, to check whether homing of a UE that requests a location of the UE matches homing of a GMLC that is in an LCS system and that can provide the location of the UE. In this way, location information of the UE can be obtained in a controllable manner, thereby avoiding leakage of the location of the UE, and reducing a risk caused by the leakage of the location of the UE after the GMLC is attacked. The information sending method in this application may be performed by any network element in the LCS system, or may be performed by a plurality of network elements in the LCS system. A quantity and types of network elements that perform the method are not limited in this application. For ease of description, an example in which a network element for performing the information sending method in this application is a first device is used for illustration in this application.

The LCS information can indicate a UE whose location can be provided, so that the first device in the LCS system can determine, based on the LCS information, whether the location of the UE can be provided for the UE that requests the location of the UE. The location of the UE may be understood as an LCS of the UE, that is, a location request device is allowed to request the location of the UE from the GMLC in the LCS system, and the GMLC in the LCS system is allowed to provide location information of the UE for the location request device.

The location request device may include but is not limited to a network client, an application function entity (application function, AF), a network data analytics function entity (network data analytics function, NWDAF), or the like.

In conclusion, based on comprehensive consideration of an architecture of the LCS system, the location request device, the UE, an actual situation, and other factors, the newly added LCS information may identify a UE region in which each GMLC in the LCS system can provide a location of a UE, or may identify a GMLC region in which each UE requests a location of the UE.

In consideration that a UE region in which the GMLC can provide a location of a UE is usually a region of the LCS system, for example, an edge region, a core network area, a sub-region in the edge region, or a sub-region in the core network area, to be specific, homing of the UE region is definite/fixed, it can be learned that homing of the UE region in which the GMLC can provide the location of the UE is also definite/fixed.

Therefore, the LCS information may identify at least one of a home region (region) of the GMLC, a network service region of the GMLC, a home operator of the GMLC, a home enterprise of the GMLC, a home region (region) of the UE, a home enterprise of the UE, a service application (application, APP) of the UE, or an access network area of the UE.

A specific implementation of the LCS information is not limited in this application.

In some embodiments, the LCS information may include at least one of an edge region identifier (region ID) of the GMLC, an identifier (ID) of the GMLC, an instance identifier (instance ID) of the GMLC, an internet protocol address IP of the GMLC, a network port port of the GMLC, an identifier of the AMF/UDM (NF instance ID), an identifier (like an SUPI and an IMSI) of the UE, an application identifier (APP ID) of the UE, an application function entity identifier (AF ID), an application server identifier (Application Server (AS) ID), a client identifier (Client ID) of the UE, a region identifier subscribed to by the UE with a home operator, a region identifier registered by the UE, a home enterprise identifier of the UE, an identifier (like NSSAI and S-NSSAI) of a network slice accessed by the UE, a tracking area identifier (TA (tracking area) range) of the UE, an identifier of a cell region (cell range) accessed by the UE, or geographic location information of the UE. The LCS system may be applicable to various LCS scenarios, for example, an edge LCS scenario.

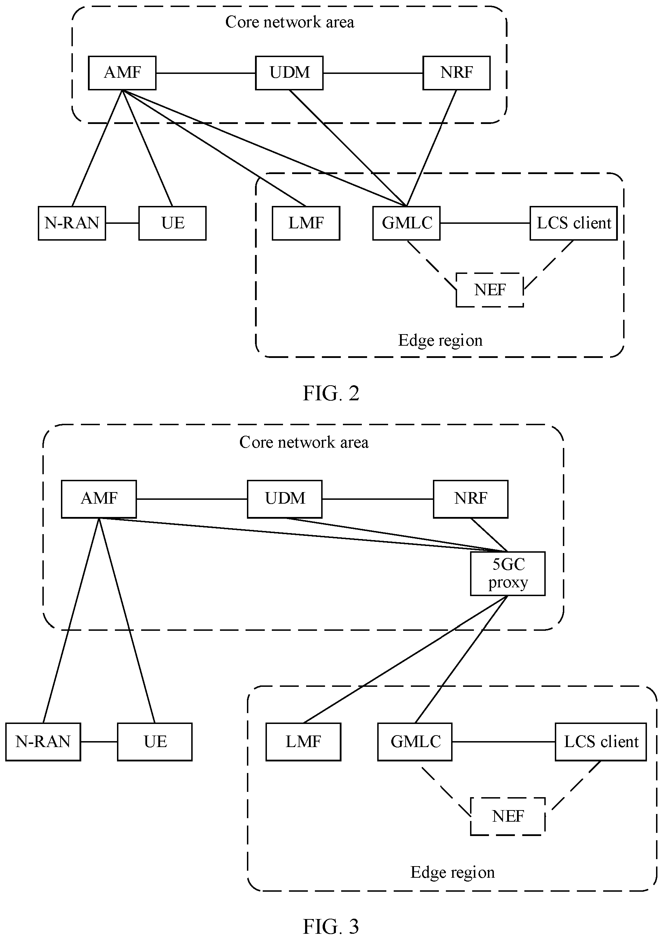

The following describes in detail various implementations of an LCS system in an edge LCS scenario with reference to FIG. 2 to FIG. 4.

FIG. 2 to FIG. 4 are architectural diagrams of an LCS system according to an embodiment of this application. For ease of description, in FIG. 2 to FIG. 4, an LCS client is used as an example of a location request device.

In the edge LCS scenario, a home region of the LCS system can be divided into a core network area and an edge region.

As shown in FIG. 2, an AMF, a UDM, and an NRF are located in the core network area of the LCS system. An LMF and a GMLC are located in the edge region of the LCS system.

As shown in FIG. 3, the LCS system may further include a 5GC proxy entity (proxy). An AMF, a UDM, an NRF, and the 5GC proxy are located in the core network area of the LCS system. An LMF and a GMLC are located in the edge region of the LCS system.

The LMF/GMLC is no longer directly in communication connection with the AMF/UDM/NRF, but needs to be in communication connection with the AMF/UDM/NRF via the 5GC proxy.

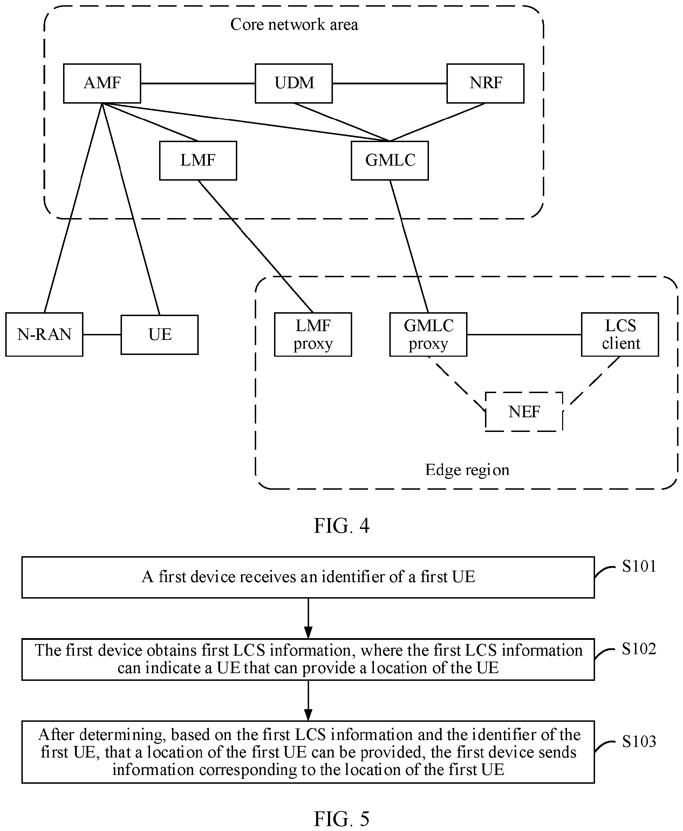

As shown in FIG. 4, the LCS system may further include an LMF proxy and a GMLC proxy. An AMF, a UDM, an NRF, an LMF, and a GMLC are located in the core network area of the LCS system. The LMF proxy and the GMLC proxy are located in the edge region of the LCS system.

The GMLC and the location request device are no longer directly in communication connection with each other, but need to be in communication connection with each other via the GMLC proxy. The LMF proxy is in communication connection with the AMF via the LMF.

In addition, in FIG. 2 to FIG. 4, the LCS system may further include a network exposure function entity (network exposure function, NEF). The NEF is mainly responsible for providing an access interface for the location request device, and obtaining a series of statuses of a network or a UE, or is configured to adjust and optimize network performance, affect a user behavior, or the like.

The NEF is located in the edge region of the LCS system. The GMLC and the location request device are no longer directly in communication connection with each other, but need to be in communication connection with each other via the NEF.

It should be noted that this application includes but is not limited to the foregoing edge LCS scenario. For example, either the LMF or the GMLC is located in the edge region of the LCS system.

A first device in the LCS system may be the AMF, the UDM, the GMLC, the NEF, or the GMLC proxy.

Based on the foregoing descriptions, in the following embodiments of this application, the first device in the LCS system shown in FIG. 2 to FIG. 4 is used as an example to describe in detail the information sending method provided in this application with reference to the accompanying drawings and application scenarios.

FIG. 5 is a schematic flowchart of an information sending method according to an embodiment of this application.

As shown in FIG. 5, the information sending method provided in this application may include the following steps.

S101: A first device receives an identifier of a first UE.

The identifier of the first UE uniquely identifies the first UE. A specific implementation of the identifier of the first UE is not limited in this application. For example, the identifier of the first UE may be an SUPI or a GPSI of the first UE. In addition, there may be one or more first UEs. In a case of a plurality of UEs, types of the plurality of UEs may be the same or different.

In this way, the first device may determine, based on the identifier of the first UE, that a location request device requests a location of the first UE from a GMLC in an LCS system, and may determine that a UE on which the location request device requests to execute a location service is the first UE.

For example, when the location request device requests an LCS of a UE/some UEs, the first device needs to know the specific UE/ specific UEs whose LCS is requested.

S102: The first device obtains first LCS information, where the first LCS information can indicate a UE whose location can be provided.

For a specific implementation of the first LCS information, refer to the foregoing descriptions of the LCS information. For a specific implementation of providing the location of the UE, refer to the foregoing descriptions. Details are not described herein again.

In this way, the first device may determine, based on the first LCS information, a UE region in which a GMLC corresponding to the first device can provide the location of the UE, or may determine a GMLC region in which the first UE requests the location of the UE.

In other words, the first device may determine specific UEs for which the GMLC corresponding to the first device can provide LCSs, that is, specific terminal devices from which the GMLC allows the location request device to request location services, or the first device may determine a specific GMLC that can provide an LCS for the first UE, that is, a specific GMLC that is allowed to provide an LCS for the first UE whose LCS is requested by the location request device end.

It should be noted that when the first device is the GMLC, the GMLC corresponding to the first device is the GMLC. When the first device is not the GMLC, the GMLC corresponding to the first device is another network element other than the GMLC in the LCS system.

S103: After determining, based on the first LCS information and the identifier of the first UE, that the location of the first UE can be provided, the first device sends information corresponding to the location of the first UE.

Based on the descriptions of S102, it can be learned that the first UE on which the LCS is requested to be executed needs to match the GMLC that corresponds to the first device and that provides the LCS, in other words, the first UE needs to be in the UE region in which the GMLC corresponding to the first device can provide a location service, or the GMLC corresponding to the first device needs to be in a GMLC region in which the first UE can be provided with a location service.

The first device may detect, based on the first LCS information and the identifier of the first UE, whether homing of the first UE that requests the location of the UE matches homing of the GMLC corresponding to the first device that can provide the location of the UE, that is, determine whether the first UE is in UEs for which the GMLC corresponding to the first device can provide UE information, or determine whether the GMLC corresponding to the first device is in GMLCs that can provide information about the first UE, to determine whether the location of the first UE can be provided.

In this way, after determining that the location of the first UE can be provided, the first device may send the information corresponding to the location of the first UE.

The information corresponding to the location of the first UE may be location information of the first UE, or may be related information used to request location information of the first UE. This is not limited in this application.

According to the information sending method provided in this application, the first device receives the identifier of the first UE, and may determine, based on the identifier of the first UE, the first UE that requests the location of the UE. The first device obtains the first LCS information, where the first LCS information can indicate the UE whose location can be provided, and may determine, based on the first LCS information, the UE region in which the GMLC corresponding to the first device can provide the location of the UE, or may determine, based on the first LCS information, the GMLC region in which the first UE requests the location of the UE. Therefore, the first device may check, based on the first LCS information and the identifier of the first UE, whether the homing of the first UE matches the homing of the GMLC corresponding to the first device, to determine whether the location of the first UE can be provided. After determining that the location of the first UE can be provided, the first device may send the information corresponding to the location of the first UE.

In this way, based on a case that homing of a UE that requests a location of the UE and homing of the GMLC that can provide the location of the UE in the LCS system are matched in an LCS service procedure, location information of the UE can be obtained in a controllable manner. This provides a new implementation for privacy detection of the UE, maximally avoids leakage of the location of the UE, and reduces a risk caused by the leakage of the location of the UE after a network element in the LCS system is attacked.

The following separately describes the information sending method in this application with reference to different implementations of the first device.

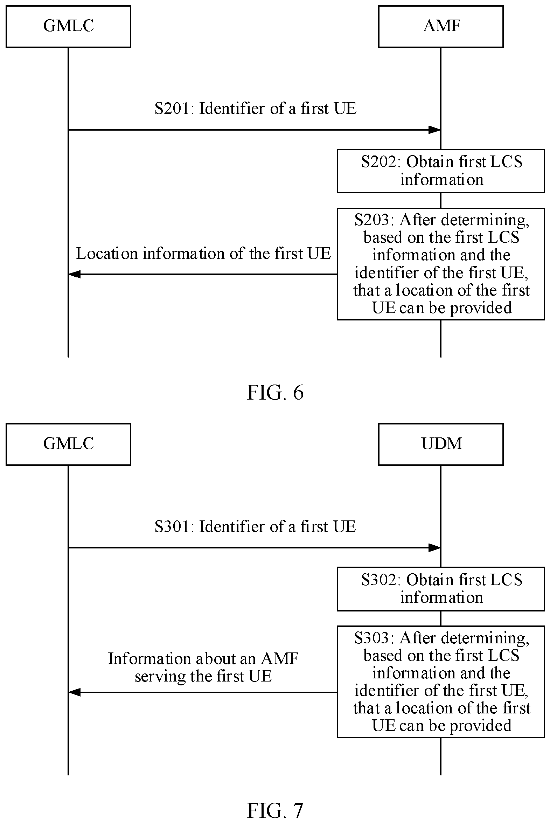

FIG. 6 is a signaling exchange diagram of an information sending method according to an embodiment of this application.

As shown in FIG. 6, when the first device is an AMF, the information sending method provided in this application may include the following steps.

S201: A GMLC sends an identifier of a first UE to the AMF.

The GMLC is a GMLC corresponding to the first device, that is, a GMLC corresponding to the AMF. The GMLC corresponding to the AMF may be understood as a GMLC that belongs to a same LCS system as the AMF and that can request location information of the first UE from the AMF. The GMLC corresponding to the AMF may send the identifier of the first UE to the AMF.

The GMLC corresponding to the AMF may include the identifier of the first UE in a request 1, and send the request 1 to the AMF, so that the AMF may obtain the identifier of the first UE from the request 1. A specific implementation of the request 1 is not limited in this application. For example, the Namf_Location_ProvidePositioningInfo Request in S14 shown in FIG. 1 may be used as the request 1.

S202: The AMF obtains first LCS information.

A specific implementation in which the AMF obtains the first LCS information is not limited in this application.

In some embodiments, for any GMLC in the LCS system, a UE region in which the GMLC can provide a location of a UE may be one or more regions in the LCS system. Therefore, the GMLC may correspond to one or more pieces of LCS information.

Based on the foregoing descriptions, the LCS system may preconfigure a correspondence between each GMLC and LCS information corresponding to each GMLC. The correspondence may be represented or stored by using a table, an array, a key-value pair, or the like.

In this way, the AMF may obtain, based on the preconfigured correspondence between each GMLC and LCS information corresponding to each GMLC, LCS information corresponding to the GMLC corresponding to the AMF, that is, the first LCS information.

In some other embodiments, the first LCS information corresponding to the GMLC corresponding to the AMF may be pre-stored in a certificate of the GMLC corresponding to the AMF, so that the AMF may obtain the first LCS information from the certificate of the GMLC corresponding to the AMF.

In some other embodiments, the first LCS information corresponding to the GMLC corresponding to the AMF may be pre-written into an access token (access token) of the GMLC corresponding to the AMF, so that the AMF may obtain the first LCS information from the access token of the GMLC corresponding to the AMF.

The GMLC corresponding to the AMF may include the access token of the GMLC corresponding to the AMF in a request 2, and send the request 2 to the AMF, so that the AMF may obtain the first LCS information from the request 2. A specific implementation of the request 2 is not limited in this application.

In addition, the request 2 and the request 1 may be a same request, or may be different requests. It should be noted that when the request 2 and the request 1 are a same request, the request includes the identifier of the first UE and the access token of the GMLC corresponding to the AMF.

In some other embodiments, the GMLC corresponding to the AMF may send the first LCS information to the AMF.

The GMLC corresponding to the AMF may include the first LCS information in a request 3, and send the request 3 to the AMF, so that the AMF may obtain the first LCS information from the request 3. A specific implementation of the request 3 is not limited in this application.

In addition, the request 3 and the request 1 may be a same request, or may be different requests. It should be noted that when the request 3 and the request 1 are a same request, the request includes the identifier of the first UE and the first LCS information.

In conclusion, the AMF may obtain the first LCS information.

S203: After determining, based on the first LCS information and the identifier of the first UE, that a location of the first UE can be provided, the AMF sends the location information of the first UE to the GMLC.

The AMF may determine, in a plurality of manners, whether the location of the first UE can be provided.

For any piece of LCS information, a UE region in which a GMLC can provide a location of a UE and that is identified by the LCS information is definite/fixed. Therefore, the LCS information may be represented by using a UE identifier set (UE ID range), and the UE identifier set includes an identifier of each UE that can provide a location of the UE.

In some embodiments, the first LCS information corresponds to a UE identifier set, the UE identifier set includes an identifier of a UE whose location can be provided, and the UE identifier set includes the identifier of the first UE.

In other words, the AMF may obtain a UE identifier set corresponding to the first LCS information, and the UE identifier set includes an identifier of a UE whose location can be provided.

In this way, the AMF may determine whether the UE identifier set includes the identifier of the first UE. After determining that the UE identifier set includes the identifier of the first UE, the AMF may determine that the location of the first UE can be provided.

A specific implementation in which the AMF obtains the UE identifier set corresponding to the first LCS information is not limited in this application.

Optionally, the UE identifier set is obtained based on the first LCS information and a preconfigured matching relationship between LCS information and a corresponding UE identifier set.

The LCS system may preconfigure, in the AMF or a UDM, a matching relationship between each piece of LCS information and a UE identifier set corresponding to each piece of LCS information. The matching relationship may be represented by using a table, an array, a key-value pair, or the like.

Based on the foregoing descriptions, the AMF may obtain, based on the preconfigured matching relationship between LCS information and a UE identifier set corresponding to the LCS information, a UE identifier set that matches the first LCS information, that is, the UE identifier set corresponding to the first LCS information.

Alternatively, the AMF may obtain the UE identifier set from the UDM.

The AMF may send the first LCS information to the UDM. The UDM may obtain, based on the first LCS information and the preconfigured matching relationship between LCS information and a UE identifier set corresponding to the LCS information, a UE identifier set that matches the first LCS information, that is, the UE identifier set corresponding to the first LCS information. The UDM may send the UE identifier set corresponding to the first LCS information to the AMF, so that the AMF can obtain the UE identifier set corresponding to the first LCS information.

For example, the AMF may include the first LCS information in a request 4, and send the request 4 to the UDM. The UDM may include the UE identifier set corresponding to the first LCS information in a response 4, and send the response 4 to the AMF, so that the AMF obtains, from the response 4, the UE identifier set corresponding to the first LCS information. Specific implementations of the request 4 and the respond 4 are not limited in this application.

Optionally, the UE identifier set is obtained from the access token of the GMLC corresponding to the first LCS information.

Each GMLC corresponds to LCS information corresponding to each GMLC, and a UE identifier set that matches the GMLC may be pre-written into an access token of the GMLC.

In this way, the AMF may determine, based on the first LCS information, the access token of the GMLC corresponding to the first LCS information, that is, the access token of the GMLC corresponding to the AMF, so that the AMF may obtain, from the access token of the GMLC corresponding to the first LCS information, the UE identifier set corresponding to the first LCS information.

Optionally, the UE identifier set is a UE identifier set that is in the access token of the GMLC and that corresponds to the first LCS information.

A UE identifier set that matches each piece of LCS information may be pre-written into the access token of each GMLC.

In this way, the AMF may obtain, from subscription information of the GMLC corresponding to the AMF, a UE identifier set that matches the first LCS information, that is, the UE identifier set corresponding to the first LCS information.

It should be noted that, when the first LCS information is obtained from the access token of the GMLC corresponding to the AMF, the AMF usually does not obtain, from the access token of the GMLC corresponding to the AMF, the UE identifier set corresponding to the first LCS information, but obtains the UE identifier set in another manner described above.

In this way, the AMF may obtain the UE identifier set corresponding to the first LCS information.

In conclusion, the AMF may determine, by checking whether the identifier of the first UE is in the UE identifier set that matches the first LCS information, whether the location of the first UE can be provided.

For example, for the first LCS information, the following is preconfigured in the LCS system: A UE identifier set 1 corresponding to LCS information 1 is a set in which 01000001 to 01099999 are traversed, and a UE identifier set 2 corresponding to LCS information 2 is a set in which 075500001 to 075599999 are traversed.

It is assumed that the identifier of the first UE is 075508888. In this case, when the first LCS information is the LCS information 1, the AMF may determine that the UE identifier set corresponding to the first LCS information is the UE identifier set 1. When the first LCS information is the LCS information 2, the AMF may determine that the UE identifier set corresponding to the first LCS information is the UE identifier set 2.

In this way, the AMF may determine whether 075508888 is included in the UE identifier set determined in the foregoing process, to determine whether the location of the first UE can be provided.

In addition to the UE identifier set, for any piece of LCS information, a GMLC region in which a location of a UE can be provided and that is identified by the LCS information is definite/fixed. Based on this, the LCS information may be represented by using an LCS identifier (region ID), identifying an LCS region in which a location of a UE can be provided.

For any GMLC in the LCS system, the LCS identifier identifies an LCS region that corresponds to the GMLC and in which a location of a UE can be provided. The LCS region herein may include the GMLC and the UE region corresponding to the location of the UE. For any UE, the LCS identifier identifies an LCS region in which a location of the UE can be provided. The LCS region herein may include the UE and a GMLC region in which the location of the UE can be provided.

In some embodiments, the first LCS information corresponds to a first LCS identifier, and the first LCS identifier identifies an LCS region that corresponds to the first device and in which a location of a UE can be provided.

In other words, the AMF may obtain the first LCS identifier corresponding to the first LCS information. The first LCS identifier identifies an LCS region in which the GMLC corresponding to the AMF can provide a location of a UE, that is, identifies the GMLC corresponding to the AMF and a UE region in which the GMLC corresponding to the AMF can provide a location of a UE.

The AMF may obtain a second LCS identifier from subscription information of the first UE via the UDM based on the identifier of the first UE. The second LCS identifier identifies an LCS region in which the location of the first UE can be provided, that is, identifies the first UE and a GMLC region in which the first UE requests the location of the UE.

The AMF may send the identifier of the first UE to the UDM. The UDM may determine the subscription information of the first UE based on the identifier of the first UE, and obtain the second LCS identifier from the subscription information of the first UE. The UDM may send the second LCS identifier to the AMF.

For example, the AMF may include the identifier of the first UE in a request 5, and send the request 5 to the UDM. The UDM may include the second LCS identifier in a response 5, and send the response 5 to the AMF, so that the AMF may obtain the second LCS identifier from the response 5. Specific implementations of the request 5 and the respond 5 are not limited in this application.

In this way, the AMF may determine whether the first LCS identifier is the same as the second LCS identifier, to determine whether the location of the first UE can be provided. After determining that the first LCS identifier is the same as the second LCS identifier, the AMF may determine that the location of the first UE can be provided.

In conclusion, the AMF may determine, by checking whether the first LCS identifier is the same as the second LCS identifier corresponding to the identifier of the first UE, whether the location of the first UE can be provided.

For example, the following is preconfigured in the LCS system: Subscription information of a UE 1 includes an LCS identifier 1 identifying Beijing, and subscription information of a UE 2 includes an LCS identifier 2 identifying Shenzhen.

It is assumed that the identifier of the first UE is 075508888, and the first LCS identifier is the LCS identifier 2 identifying Shenzhen. In this case, when a UE corresponding to the identifier of the first UE is the UE 1, the AMF may learn, from the subscription information of the UE 1, that the second LCS identifier is the LCS identifier 1. When a UE corresponding to the identifier of the first UE is the UE 2, the AMF may learn, from the subscription information of the UE 2, that the second LCS identifier is the LCS identifier 2.

In this way, the AMF may determine whether the first LCS identifier is the same as the second LCS identifier, to determine whether the location of the first UE can be provided.

It should be noted that, in addition to the foregoing implementations, the AMF may further obtain, from the UDM, a determining result for determining whether the location of the first UE can be provided.

In some embodiments, the AMF may send a request 6 to the UDM, where the request 6 includes the identifier of the first UE, so that the UDM obtains the identifier of the first UE. The UDM may further obtain the first LCS information. For a specific implementation thereof, refer to the descriptions about obtaining the first LCS information by the UDM in FIG. 7. Details are not described herein.

The UDM may determine, based on the first LCS information and the identifier of the first UE, whether the AMF can provide the location of the first UE. The UDM sends a response 6 to the AMF, where the response 6 indicates whether the AMF can provide the location of the first UE. When the response 6 indicates that the AMF can provide the location of the first UE, the AMF may send the location information of the first UE to the GMLC. When the response 6 indicates that the AMF cannot provide the location of the first UE, the AMF may not send the location information of the first UE to the GMLC.

Specific implementations of the request 6 and the respond 6 are not limited in this application.

In this application, the AMF is an important network element participating in an LCS service procedure. After the GMLC corresponding to the AMF requests the location information of the first UE from the AMF, and/or before the AMF sends the location information of the first UE to the GMLC corresponding to the AMF, the AMF may determine, based on the first LCS information and the identifier of the first UE, whether the location of the first UE can be provided, to check whether homing of the first UE matches homing of the GMLC corresponding to the AMF.

After determining that the location of the first UE can be provided, the AMF may send the location information of the first UE to the GMLC corresponding to the AMF, to ensure that a process in which the GMLC corresponding to the AMF obtains the location information of the first UE via the AMF is controllable. After determining that the location of the first UE cannot be provided, the AMF does not send the location information of the first UE to the GMLC corresponding to the AMF, to ensure that the GMLC corresponding to the AMF cannot unauthorizedly obtain the location information of the first UE via the AMF, thereby effectively avoiding leakage of the location of the UE.

FIG. 7 is a signaling exchange diagram of an information sending method according to an embodiment of this application.

As shown in FIG. 7, when the first device is a UDM, the information sending method provided in this application may include the following steps.

S301: A GMLC sends and receives an identifier of a first UE to the UDM.

The GMLC is a GMLC corresponding to the first device, that is, a GMLC corresponding to the UDM. The GMLC corresponding to the UDM may be understood as a GMLC that belongs to a same LCS system as the UDM and that can request, from the UDM, information about an AMF serving the first UE.

The GMLC corresponding to the UDM may send the identifier of the first UE to the UDM. The GMLC corresponding to the UDM may include the identifier of the first UE in a request 7, and send the request 7 to the UDM, so that the UDM may obtain the identifier of the first UE from the request 7. A specific implementation of the request 7 is not limited in this application. For example, the Nudm_UECM_Get Request in S12 shown in FIG. 1 may be used as the request 7. Alternatively, the request 7 may be a newly added request, for example, Nudm_LCS_Check Request.

S302: The UDM obtains first LCS information.

A specific implementation in which the UDM obtains the first LCS information in S302 is similar to the implementation in which the AMF obtains the first LCS information in S202 in FIG. 6, and details are not described herein again.

S303: After determining, based on the first LCS information and the identifier of the first UE, that a location of the first UE can be provided, the UDM sends, to the GMLC, the information about the AMF serving the first UE.

The information about the AMF serving the UE is used by the GMLC to request location information of the first UE. The information about the AMF serving the first UE may be understood as follows: The GMLC corresponding to the UDM can request the location information of the first UE based on the information about the AMF. A specific implementation of the information about the AMF serving the first UE is not limited in this application. For example, the information about the AMF serving the first UE may include a network address of the AMF and the like.

Based on the descriptions in the embodiment of S203, the UDM may determine, in a plurality of manners, whether the location of the first UE can be provided.

In some embodiments, the first LCS information corresponds to a UE identifier set, the UE identifier set includes an identifier of a UE whose location can be provided, and the UE identifier set includes the identifier of the first UE.

In other words, the UDM may obtain a UE identifier set corresponding to the first LCS information, and the UE identifier set includes an identifier of a UE whose location can be provided.

In this way, the UDM may determine whether the UE identifier set includes the identifier of the first UE. After determining that the UE identifier set includes the identifier of the first UE, the UDM may determine that the location of the first UE can be provided.

A specific implementation in which the UDM obtains the UE identifier set corresponding to the first LCS information is not limited in this application.

Optionally, the UE identifier set is obtained based on the first LCS information and a preconfigured matching relationship between LCS information and a corresponding UE identifier set.

The LCS system may preconfigure, in the UDM, a matching relationship between each piece of LCS information and a UE identifier set corresponding to each piece of LCS information. The matching relationship may be represented by using a table, an array, a key-value pair, or the like.

In this way, the UDM may obtain, based on the preconfigured matching relationship between LCS information and a UE identifier set corresponding to the LCS information, a UE identifier set that matches the first LCS information, that is, the UE identifier set corresponding to the first LCS information.

Optionally, the UE identifier set is obtained from the access token of the GMLC corresponding to the first LCS information.

Each GMLC corresponds to LCS information corresponding to each GMLC, and a UE identifier set that matches the GMLC may be pre-written into an access token of the GMLC.

In this way, the UDM may determine, based on the first LCS information, the access token of the GMLC corresponding to the first LCS information, that is, an access token of the GMLC corresponding to the UDM, so that the UDM may obtain, from the access token of the GMLC corresponding to the first LCS information, the UE identifier set corresponding to the first LCS information.

Optionally, the UE identifier set is a UE identifier set that is in an access token of a GMLC and that corresponds to the first LCS information.

A UE identifier set that matches each piece of LCS information may be pre-written into an access token of each GMLC.

In this way, the UDM may obtain, from subscription information of the GMLC corresponding to the UDM, a UE identifier set that matches the first LCS information, that is, the UE identifier set corresponding to the first LCS information.

It should be noted that, when the first LCS information is obtained from the access token of the GMLC corresponding to the UDM, the UDM usually does not obtain, from the access token of the GMLC corresponding to the UDM, the UE identifier set corresponding to the first LCS information, but obtains the UE identifier set in another manner described above.

In conclusion, the UDM may determine, by checking whether the identifier of the first UE is in the UE identifier set that matches the first LCS information, whether the location of the first UE can be provided.

In some other embodiments, the first LCS information corresponds to a first LCS identifier, and the first LCS identifier identifies an LCS region that corresponds to the first device and in which a location of a UE can be provided.

In other words, the UDM may obtain the first LCS identifier corresponding to the first LCS information. The first LCS identifier identifies an LCS region in which the GMLC corresponding to the UDM can provide a location of a UE, that is, identifies the GMLC corresponding to the UDM and a UE region in which the GMLC corresponding to the UDM can provide a location of a UE.

The UDM may determine subscription information of the first UE based on the identifier of the first UE, and obtain a second LCS identifier from the subscription information of the first UE. The second LCS identifier identifies an LCS region in which the location of the first UE can be provided, that is, identifies the first UE and a GMLC region in which the first UE requests the location of the UE.

In this way, the UDM may determine whether the first LCS identifier is the same as the second LCS identifier, to determine whether the location of the first UE can be provided. After determining that the first LCS identifier is the same as the second LCS identifier, the UDM may determine that the location of the first UE can be provided.

In conclusion, the UDM may determine, by checking whether the first LCS identifier is the same as the second LCS identifier corresponding to the identifier of the first UE, whether the location of the first UE can be provided.

In this application, the UDM is an important network element participating in an LCS service procedure. After the GMLC corresponding to the UDM requests, from the UDM, the information about the AMF serving the first UE, the UDM may determine, based on the first LCS information and the identifier of the first UE, whether the location of the first UE can be provided, to check whether homing of the first UE matches homing of the GMLC corresponding to the UDM.

After determining that the location of the first UE can be provided, the UDM may send, to the GMLC corresponding to the UDM, the information about the AMF serving the first UE. This helps the GMLC corresponding to the UDM determine the AMF serving the first UE, and ensures that a process in which the GMLC corresponding to the UDM obtains the location information of the first UE via the AMF is controllable. After determining that the location of the first UE cannot be provided, the UDM does not send, to the GMLC corresponding to the UDM, the information about the AMF serving the first UE, to ensure that the GMLC corresponding to the UDM cannot unauthorizedly obtain the location information of the first UE via the AMF, thereby effectively avoiding leakage of the location of the UE.

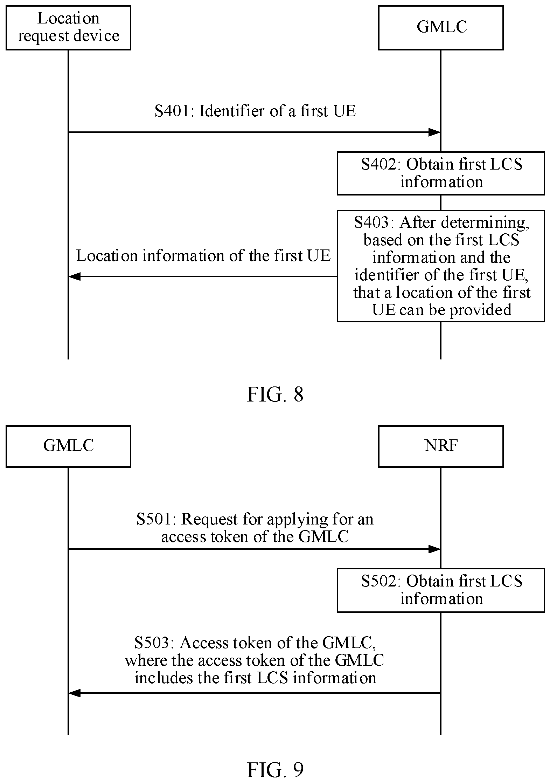

FIG. 8 is a signaling exchange diagram of an information sending method according to an embodiment of this application.

As shown in FIG. 8, when the first device is a GMLC, the information sending method provided in this application may include the following steps.

S401: A location request device sends an identifier of a first UE to the GMLC.

The GMLC is a GMLC corresponding to the first device, that is, the GMLC itself.

The location request device may include the identifier of the first UE in a request 8, and send the request 8 to the GMLC, so that the GMLC may obtain the identifier of the first UE from the request 8. A specific implementation of the request 8 is not limited in this application. For example, the LCS service request in S11 shown in FIG. 1 may be used as the request 8.

S402: The GMLC obtains first LCS information.

A specific implementation in which the GMLC obtains the first LCS information is not limited in this application.

In some embodiments, an LCS system may preconfigure a correspondence between each GMLC and LCS information corresponding to each GMLC. The correspondence may be represented or stored by using a table, an array, a key-value pair, or the like.

In this way, the GMLC may obtain, based on the preconfigured correspondence between each GMLC and LCS information corresponding to each GMLC, LCS information corresponding to the GMLC, that is, the first LCS information.

In some other embodiments, the GMLC obtains the first LCS information from a certificate of the location request device.

LCS information corresponding to the GMLC that provides a location of the UE for the first UE, that is, the first LCS information, may be pre-stored in the certificate of the location request device, so that the GMLC may obtain the first LCS information from the certificate of the location request device.

In some other embodiments, the GMLC receives the first LCS information from the location request device.

The location request device may include the first LCS information in a request 9, and send the request 9 to the GMLC, so that the GMLC may obtain the first LCS information from the request 9. A specific implementation of the request 9 is not limited in this application.

In addition, the request 9 and the request 8 may be a same request, or may be different requests. It should be noted that when the request 9 and the request 8 are a same request, the request includes the identifier of the first UE and the first LCS information.

S403: After determining, based on the first LCS information and the identifier of the first UE, that a location of the first UE can be provided, the GMLC sends location information of the first UE to the location request device.

The specific implementation in S403 in which the GMLC determines, based on the first LCS information and the identifier of the first UE, that the location of the first UE can be provided is similar to the implementation in S203 in FIG. 6 in which the AMF determines, based on the first LCS information and the identifier of the first UE, that the location of the first UE can be provided. Details are not described herein again.

It should be noted that, in addition to the foregoing implementations, the GMLC may further determine, via a UDM, whether the location of the first UE can be provided.

In some embodiments, the GMLC is used as an example. The GMLC may send a request 10 to the UDM, where the request 10 includes the identifier of the first UE, so that the UDM obtains the identifier of the first UE. The UDM may further obtain the first LCS information. For a specific implementation thereof, refer to the descriptions about obtaining the first LCS information by the UDM in FIG. 7. Details are not described herein.

The UDM may determine, based on the first LCS information and the identifier of the first UE, whether the GMLC can provide the location of the first UE. The UDM sends a response 10 to the GMLC, where the response 10 indicates whether the GMLC can provide the location of the first UE. When the response 10 indicates that the GMLC can provide the location information of the first UE, the GMLC may send the location information of the first UE to the location request device. When the response 10 indicates that the GMLC cannot provide the location information of the first UE, the GMLC may not send the location information of the first UE to the location request device.

A specific implementation of the request 10 and the response 10 is not limited in this application.

In conclusion, the GMLC may determine, by checking whether the identifier of the first UE is in a UE identifier set that matches the first LCS information, or by checking whether a first LCS identifier is the same as a second LCS identifier corresponding to the identifier of the first UE, whether the location of the first UE can be provided.

It should be noted that the first device may alternatively be an NEF or a GMLC proxy in the LCS system. For a specific implementation in which the NEF or the GMLC proxy performs the information sending method in this application, refer to the descriptions about performing the information sending method by the GMLC in this application in the embodiment in FIG. 8. Details are not described herein again.

In addition, generally, if the location request device preferentially sends the identifier of the first UE to a specific network element like the GMLC, the NEF, or the GMLC proxy, the network element may perform the information sending method in this application.

In this application, the GMLC is an important network element participating in an LCS service procedure. After the location request device requests the location information of the first UE from the GMLC and at any one moment before the GMLC sends the location information of the first UE to the location request device, the GMLC may determine, based on the first LCS information and the identifier of the first UE, whether the location of the first UE can be provided, to check whether homing of the first UE matches homing of the GMLC corresponding to the AMF.

After determining that the location of the first UE can be provided, the GMLC may send the location information of the first UE to the location request device, to ensure that a process in which the GMLC transmits the location information of the first UE to the location request device is controllable. After determining that the location of the first UE cannot be provided, the GMLC does not send the location information of the first UE to the location request device, to ensure that the location request device cannot unauthorizedly obtain the location information of the first UE via the GMLC, thereby effectively avoiding leakage of the location of the UE.

Based on the foregoing descriptions, it is mainly considered that in an open authorization (open authorization, OAuth) protocol, the first LCS information may be pre-written into an access token of the GMLC, so that the first device can determine in time whether the location of the first UE can be provided. This helps obtain location information of a UE in a controllable manner.

It should be noted that the access token of the GMLC herein is different from the access token of the GMLC in the conventional technology shown in FIG. 1. The first LCS information has been written into the access token of the GMLC herein, and the first LCS information is not written into the access token of the GMLC in FIG. 1.

With reference to FIG. 9, the following describes in detail an implementation process in which an NRF writes first LCS information into an access token of a GMLC.

FIG. 9 is a signaling exchange diagram of an information sending method according to an embodiment of this application.

As shown in FIG. 9, the information sending method provided in this application may include the following steps.

S501: The GMLC sends, to the NRF, a request for applying for the access token of the GMLC.

The GMLC and the NRF belong to a same LCS system, and the GMLC can request the access token of the GMLC from the NRF. A specific implementation of the request is not limited in this application. For example, the request may include an identifier of the access token of the GMLC. An Nnrf_AccessToken_Get Request may be used as the request.

S502: The NRF obtains first LCS information.

A specific implementation in which the NRF obtains the first LCS information is not limited in this application.

In some embodiments, the NRF obtains the first LCS information from a certificate of the GMLC.

The first LCS information corresponding to the GMLC may be pre-stored in the certificate of the GMLC, so that the NRF may obtain the first LCS information from the certificate of the GMLC.

In some other embodiments, the NRF obtains the first LCS information from a registration profile (profile) of the GMLC.

The first LCS information corresponding to the GMLC may be pre-written into the registration profile of the GMLC, so that the NRF may obtain the first LCS information from the registration profile of the GMLC.

In some other embodiments, the NRF receives the first LCS information from the GMLC.

The GMLC may send the first LCS information to the NRF, so that the NRF may obtain the first LCS information.

The GMLC may include the first LCS information in a request 11, and send the request 11 to the NRF, so that the NRF may obtain the first LCS information from the request 11. A specific implementation of the request 11 is not limited in this application. The request 11 and the request in S501 may be a same request, or may be different requests. It should be noted that when the request 11 and the request in S501 are a same request, the request includes the first LCS information.

In conclusion, the NRF may obtain the first LCS information.

S503: The NRF sends the access token of the GMLC to the GMLC, where the access token of the GMLC includes the first LCS information.

The NRF may write the first LCS information into the access token of the GMLC in a plurality of manners.

In some embodiments, the first LCS information corresponds to a UE identifier set, and the access token of the GMLC includes the UE identifier set.

When the first LCS information corresponds to the UE identifier set, the NRF may write the UE identifier set into the access token of the GMLC. The UE identifier set includes an identifier of a UE whose location can be provided.

In some other embodiments, the first LCS information corresponds to a first LCS identifier, and the access token of the GMLC includes the first LCS identifier.

When the first LCS information corresponds to the first LCS identifier, the NRF may write the first LCS identifier into the access token of the GMLC. The first LCS identifier identifies an LCS region in which a GMLC corresponding to the first device can provide a location of a UE.

In addition, the NRF may further write both the UE identifier set and the first LCS identifier into the access token of the GMLC.

In this way, after determining that the first LCS information has been written into the access token of the GMLC, the NRF may send the access token of the GMLC to the GMLC, so that the first device (for example, an AMF/a UDM) can obtain the first LCS information from the access token of the GMLC.

In this application, the NRF may implement the foregoing process of applying for the access token of the GMLC, so that the first device (for example, the AMF/UDM) can obtain the pre-stored first LCS information from the access token of the GMLC, and the first device can determine whether a location of a first UE can be provided. This ensures that the process of obtaining location information of a UE is controllable.

It should be noted that, in addition to the GMLC, another network element in the LCS system may also apply to the NRF for the access token of the GMLC. A network element that applies for the access token of the GMLC is not limited in this application.

It may be understood that the NRF may store the registration profile of the GMLC, so that registration (which may be understood as registration) of the GMLC in the NRF can be implemented.

Based on the foregoing descriptions, before obtaining the first LCS information from the registration profile of the GMLC in S502, the NRF further needs to pre-store the first LCS information in the registration profile of the GMLC.

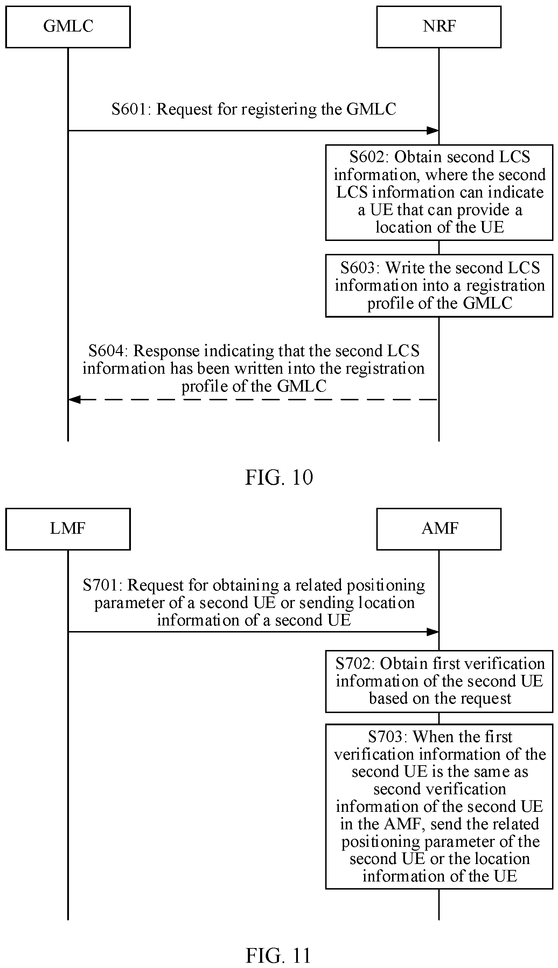

With reference to FIG. 10, the following describes in detail an implementation process in which an NRF writes first LCS information into a registration profile of a GMLC.

FIG. 10 is a signaling exchange diagram of an information sending method according to an embodiment of this application.

As shown in FIG. 10, the information sending method provided in this application may include the following steps.

S601: The GMLC sends, to the NRF, a request for registering the GMLC.

The GMLC and the NRF belong to a same LCS system, and the GMLC can request the NRF to register the GMLC. A specific implementation of the request is not limited in this application. For example, the request may include an identifier of the GMLC. An Nnrf_NFManagement_NFRegister Request may be used as the request.

S602: The NRF obtains second LCS information, where the second LCS information can indicate a UE whose location can be provided.

To distinguish between the first LCS information obtained by the NRF in S502 and the first LCS information obtained by the NRF in S602, in this application, the first LCS information in S602 may be expressed as the second LCS information, that is, the second LCS information is the first LCS information.

A specific implementation in which the NRF obtains the second LCS information is not limited in this application.

Optionally, the NRF receives the second LCS information from the GMLC.

The GMLC may include the first LCS information in a request 12, and send the request 12 to the NRF, so that the NRF may obtain the second LCS information from the request 12. A specific implementation of the request 12 is not limited in this application. The request 12 and the request in S601 may be a same request, or may be different requests. It should be noted that when the request 12 and the request in S601 are a same request, the request includes the second LCS information.

Alternatively, the NRF obtains the second LCS information from a certificate of the GMLC.

The first LCS information corresponding to the GMLC may be pre-stored in the certificate of the GMLC, so that the NRF may obtain the second LCS information from the certificate of the GMLC.

In conclusion, the NRF may obtain the second LCS information.

S603: The NRF writes the second LCS information into the registration profile of the GMLC.

In this way, it is convenient for the NRF to subsequently obtain the first LCS information from the registration profile of the GMLC.

S604: The NRF sends, to the GMLC, a response indicating that the second LCS information has been written into the registration profile of the GMLC.

Step S604 is an optional step.

After determining that the second LCS information has been written into an access token of the GMLC, the NRF may send the response to the GMLC, to conveniently notify the GMLC that the registration succeeds.

A specific implementation of the response is not limited in this application. For example, the response may include an identifier indicating that the second LCS information has been written into the access token of the GMLC. An Nnrf_NFManagement_NFRegister Response may be used as the response.

In conclusion, the NRF may implement the foregoing GMLC registration process, so that the NRF can subsequently obtain the first LCS information from the registration profile of the GMLC.

In addition, in the conventional technology shown in FIG. 1, if the LMF is maliciously controlled, after receiving an LCS request from a UE, the LMF may send location information of another UE other than the UE to the GMLC. As a result, the location information of the another UE is prone to be unauthorizedly obtained, causing leakage of a location of the another UE.

To resolve the foregoing problem, this application further provides an information sending method. An AMF may be used as a network element for checking a malicious behavior of the LMF, and may check, by using verification information of a UE, whether a UE whose related positioning parameter the LMF requests the AMF to obtain is consistent with a UE whose related positioning parameter can be provided by the AMF for the LMF, to ensure that the LMF can obtain the related positioning parameter of the UE in a controllable manner, and check whether a UE whose location information the LMF requests the AMF to forward is consistent with a UE whose location information the AMF requests the LMF to determine, to intercept subsequent forwarding of the location information of the UE by the AMF for the LMF. This can ensure that the LMF sends the location information of the UE in a controllable manner, resolve a problem of leakage of a location of the UE caused by the malicious behavior of the LMF, and help reduce a risk caused by the leakage of the location of the UE after the LMF is attacked.

It should be noted that, in an LCS service procedure, a process in which the AMF checks whether the LMF has a malicious behavior of unauthorizedly requesting a related positioning parameter of a UE or unauthorizedly forwarding location information of a UE may be independently performed, or may be performed together with the foregoing process in which the first device in the LCS system checks whether the homing of the UE that requests the location of the UE matches the homing of the GMLC in the LCS system that can provide the location of the UE, helping further avoid leakage of the location of the UE.

With reference to FIG. 11, in the following embodiment of this application, the AMF in the LCS system shown in FIG. 2 to FIG. 4 is used as an example to describe in detail the information sending method provided in this application with reference to the accompanying drawing and application scenarios.

FIG. 11 is a signaling exchange diagram of an information sending method according to an embodiment of this application.

As shown in FIG. 11, the information sending method provided in this application may include the following steps.

S701: An LMF sends, to the AMF, a request for obtaining a related positioning parameter of a second UE or sending location information of a second UE.

After receiving the request from the LMF, the AMF may determine whether to respond to the request.

A specific implementation of the request is not limited in this application.

The request is used by the LMF to request the AMF to obtain the related positioning parameter of the second UE. For example, Namf_Communication_N1N2MessageTransfer sent by the LMF to the AMF is used. It can be learned that the information sending method in this application is applicable to a scenario in which the LMF obtains the related positioning parameter of the second UE via the AMF.

Alternatively, the request is used by the LMF to request the AMF to send the location information of the second UE. For example, the Nlmf_Location_DetemineLocation Response in S19 shown in FIG. 1 is used. It can be learned that the information sending method in this application is applicable to a scenario in which the LMF sends the location information of the second UE via the AMF.

S702: The AMF obtains first verification information of the second UE based on the request.

The AMF may determine, based on the request in S701, that a UE for which the LMF needs the AMF to obtain a related positioning parameter or forward location information is the second UE, so that the AMF may obtain the first verification information of the second UE.

The first verification information of the second UE identifies that the UE for which the LMF currently requests the AMF to obtain the related positioning parameter or forward the location information is the second UE. A specific implementation of the first verification information of the second UE is not limited in this application.

S703: The AMF sends the related positioning parameter of the second UE or the location information of the UE when the first verification information of the second UE is the same as second verification information of the second UE in the AMF.

In an LCS service procedure, a GMLC requests the LMF to determine the location information of the UE via the AMF. Therefore, compared with the LMF, the AMF learns of the UE earlier. In addition, the AMF needs to request the location information of the UE from the LMF, and the LMF needs to request the related positioning parameter of the UE from the AMF. After determining the location information of the UE, the LMF needs to send the location information of the UE to the GMLC via the AMF.

Based on the foregoing descriptions, the AMF may pre-store, in the AMF, respective second verification information of UEs. The second verification information of each UE identifies a UE whose location information needs to be determined by the LMF for the GMLC/AMF, that is, a UE for which the AMF can provide a related positioning parameter or forward location information to the LMF.

In this way, a basis is laid for checking whether the second UE for which the LMF requests the AMF to obtain the related positioning parameter or send the location information is included in the UEs whose location information needs to be determined by the LMF for the GMLC/AMF.

Based on the foregoing descriptions, if the GMLC/AMF needs the LMF to determine the location information of the second UE, the AMF may pre-store the second verification information of the second UE. If the GMLC/AMF does not need the LMF to determine the location information of the second UE, the AMF does not store the second verification information of the second UE.

The second verification information of the second UE identifies the second UE whose location information needs to be determined by the LMF for the GMLC/AMF, that is, identifies a second UE for which the AMF can provide the related positioning parameter or forward the location information to the LMF. A specific implementation of the second verification information of the second UE is not limited in this application.

In addition, the first verification information of the second UE and the second verification information of the second UE may be represented in a same manner, to facilitate comparison between the first verification information and the second verification information.

Based on the descriptions of S701, the AMF may further determine whether the AMF has stored the second verification information of the second UE.

After determining that the AMF has stored the second verification information of the second UE, the AMF may obtain the second verification information of the second UE from the AMF. The AMF may determine, by checking whether the first verification information of the second UE is the same as the second verification information of the second UE, whether to send the related positioning parameter of the second UE or the location information of the second UE.

In this way, when the first verification information of the second UE is the same as the second verification information of the second UE, the AMF may send the related positioning parameter of the UE to the LMF or send the location information of the UE to the GMLC. When the first verification information of the second UE is different from the second verification information of the second UE, the AMF does not send the related positioning parameter of the UE to the LMF or send the location information of the UE to the GMLC.

After determining that the AMF does not store the second verification information of the second UE, the AMF cannot obtain the second verification information of the second UE from the AMF.

In this way, the AMF may determine that the first verification information of the second UE is different from the second verification information of the second UE, and therefore does not send the related positioning parameter of the UE to the LMF or send the location information of the UE to the GMLC.

In addition, when the first verification information of the second UE is different from the second verification information of the second UE, the AMF may notify the LMF that a response to the request sent by the LMF in S701 cannot be provided.

It should be noted that an LMF proxy in the LCS system may also perform the information sending method in this application. For a specific implementation thereof, refer to the descriptions about performing the information sending method in this application in the embodiment in FIG. 11 by the LMF. Details are not described herein again.

According to the information sending method provided in this application, the AMF receives, from the LMF, the request for obtaining the related positioning parameter of the second UE or sending the location information of the second UE. The AMF may obtain the first verification information of the second UE based on the request. The AMF pre-stores the second verification information of each UE, and the second verification information of each UE identifies the UE whose location information needs to be determined by the GMLC/AMF. Therefore, when the first verification information of the second UE is the same as the second verification information of the second UE that is pre-stored in the AMF, the AMF may determine that the second UE whose related positioning parameter the LMF requests the AMF to obtain is consistent with the second UE whose related positioning parameter can be provided by the AMF for the LMF; or determine that the second UE whose location information the LMF requests the AMF to forward is consistent with the second UE whose location information the AMF requests the LMF to determine, so that the AMF may send the related positioning parameter of the second UE to the LMF or send the location information of the second UE to the GMLC.

In this way, based on consistency between the UE for which the LMF initiates the request to the AMF and the UE whose location information needs to be determined and is pre-stored in the AMF in the LCS service procedure, the UE for which the LMF requests the AMF to obtain the related positioning parameter or forward the location information can be checked. This ensures that the LMF can obtain the related positioning parameter or the location information of the UE in a controllable manner, and after the LMF is attacked, subsequent forwarding of the location information of the UE by the AMF to the LMF is intercepted in advance. This further provides a new implementation for privacy detection of the UE, to maximally avoid a phenomenon in which a location of the UE is disclosed due to a malicious behavior of the LMF, and also reduce a risk caused by leakage of the location of the UE after the LMF is attacked.

Based on the foregoing descriptions, the second verification information of each UE in the AMF may be represented in a plurality of manners.

In some embodiments, for any UE, the AMF may use an existing identifier of the UE as second verification information of the UE. For example, the second verification information of the UE may be at least one of an identifier (SUPI or GPSI) or a context identifier of the UE.

In some other embodiments, for any UE, the AMF may add a new identifier to the UE, and use the newly added identifier as second verification information of the UE. For example, the second verification information of the UE may be at least one of a status identifier or a random number of the UE. The status identifier or the random number of the UE identifies that the UE is being positioned, that is, it indicates that the GMLC/AMF needs to determine location information of the UE.

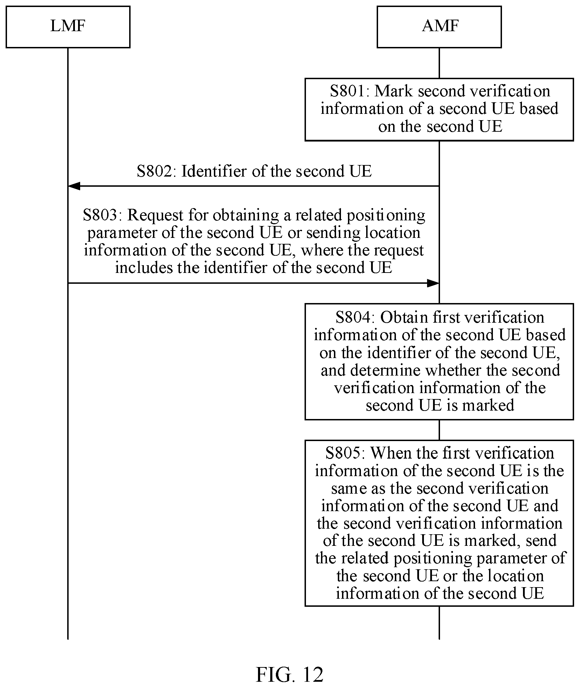

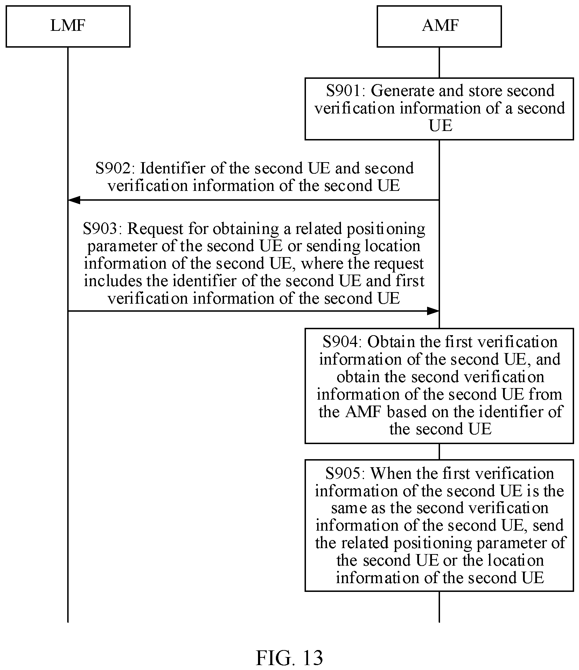

With reference to FIG. 12 and FIG. 13, on the premise that the GMLC/AMF needs to determine the location information of the second UE, the following describes detailed processes in which the AMF implements the information sending method in this application in the foregoing two representation manners of the second verification information.

FIG. 12 is a signaling exchange diagram of an information sending method according to an embodiment of this application.

As shown in FIG. 12, when an identifier or a context identifier of a second UE is used as verification information of the second UE, the information sending method provided in this application may include the following steps.

S801: An AMF marks second verification information of the second UE based on the second UE.

After receiving a request that is sent by a GMLC and that is used to determine location information of the second UE, the AMF may add an identifier to the second verification information of the second UE, or may write the second verification information of the second UE into a set, so that the second verification information of the second UE is marked by setting the identifier or the set.

When there are a plurality of second UEs, the AMF may add an identifier to second verification information of each UE, or may add a shared identifier to second verification information of the plurality of UEs. This is not limited in this application.

Alternatively, the AMF may write second verification information of each UE into a same set, or may write second verification information of the plurality of UEs into a plurality of different sets. This is not limited in this application.

In conclusion, the AMF may mark the second verification information of the second UE based on the second UE.

S802: The AMF sends an identifier of the second UE to an LMF.

An existing identifier of the second UE is used as the second verification information of the second UE. Therefore, it may be determined, based on the identifier of the second UE, whether the second verification information of the second UE is marked. Based on this, the AMF does not need to additionally send the second verification information of the second UE to the LMF.

The AMF may send the identifier of the second UE to the LMF, so that the LMF can learn that the location information of the second UE needs to be determined.

The AMF may include the identifier of the second UE in a request 13, and send the request 13 to the LMF. The request 13 is used to request a related positioning parameter of the second UE. A specific implementation of the request 13 is not limited in this application.

S803: The LMF sends, to the AMF, a request for obtaining the related positioning parameter of the second UE or sending the location information of the second UE, where the request includes the identifier of the second UE.

Based on the descriptions of S802, the AMF does not send the second verification information of the second UE to the LMF. Therefore, the LMF does not need to additionally send first verification information of the second UE to the AMF.

In this way, the LMF may send, to the AMF, the request carrying the identifier of the second UE, that is, the request in S701, so that the AMF can learn that the related positioning parameter of the second UE needs to be obtained from the second UE.

S804: The AMF obtains the first verification information of the second UE based on the identifier of the second UE, and determines whether the second verification information of the second UE is marked.

Based on the descriptions of S803, the AMF may obtain the identifier of the second UE.

When the identifier of the second UE is used as verification information of a UE, the AMF may determine that the first verification information of the second UE and the second verification information of the second UE each are the identifier of the second UE, and the AMF may determine, based on the identifier of the second UE, whether the second verification information of the second UE is marked.

For example, the AMF may search, based on the identifier of the second UE, whether there is a newly added identifier for the identifier of the second UE, or whether there is a set storing the identifier of the second UE. If there is a newly added identifier for the identifier of the second UE or there is a set storing the identifier of the second UE, the AMF may determine that the second verification information of the second UE is marked. If there is no newly added identifier for the identifier of the second UE or there is no set storing the identifier of the second UE, the AMF may determine that the second verification information of the second UE is not marked.

When the context identifier of the second UE is used as verification information of a UE, the AMF may find the context identifier of the second UE based on the identifier of the second UE. In this way, the AMF may determine that the first verification information of the second UE and the second verification information of the second UE each are the context identifier of the second UE, and the AMF may determine, based on the context identifier of the second UE, whether the second verification information of the second UE is marked.

For example, the AMF may search, based on the context identifier of the second UE, whether there is a newly added identifier for the context identifier of the second UE, or whether there is a set storing the context identifier of the second UE. If there is a newly added identifier for the context identifier of the second UE or there is a set storing the context identifier of the second UE, the AMF may determine that the second verification information of the second UE is marked. If there is no newly added identifier for the context identifier of the second UE or there is no set storing the context identifier of the second UE, the AMF may determine that the second verification information of the second UE is not marked.

In conclusion, the AMF may determine, based on the identifier of the second UE, the first verification information of the second UE, and determine whether the second verification information of the second UE is marked.

S805: The AMF sends the related positioning parameter of the second UE or the location information of the second UE when the first verification information of the second UE is the same as the second verification information of the second UE and the second verification information of the second UE is marked.

Based on the descriptions of S804, the first verification information of the second UE is the same as the second verification information of the second UE.

In addition, when the AMF/GMLC needs to determine the location information of the second UE, the AMF may perform the process of marking the second verification information based on the second UE in S801, so that the AMF may determine that the second verification information of the second UE is marked.

In this way, the AMF may send the related positioning parameter of the second UE to the LMF or send the location information of the second UE to the GMLC when the first verification information of the second UE is the same as the second verification information of the second UE and the second verification information of the second UE is marked.

In this application, the AMF may determine, by checking whether the first verification information of the second UE is the same as the second verification information of the second UE and whether the second verification information of the second UE is marked, whether the LMF has a malicious behavior of unauthorizedly requesting the related positioning parameter of the second UE or unauthorizedly forwarding the location information of the second UE, so that after the LMF is attacked, subsequent forwarding of the location information of the UE by the AMF to the LMF is intercepted in advance, thereby reducing a possibility of disclosing the location information of the second UE.

FIG. 13 is a signaling exchange diagram of an information sending method according to an embodiment of this application.

As shown in FIG. 13, when a status identifier or a random number of a second UE is used as verification information of the second UE, the information sending method provided in this application may include the following steps.

S901: An AMF generates and stores the second verification information of the second UE.

After receiving a request that is sent by a GMLC and that is used to determine location information of the second UE, the AMF may generate the second verification information of the second UE for the second UE, and store the second verification information of the second UE.

When there are a plurality of second UEs, the AMF may generate one piece of second verification information for each UE, or may generate one piece of shared second verification information for the plurality of UEs. This is not limited in this application.

In conclusion, the AMF may generate and store the second verification information of the second UE.

S902: The AMF sends an identifier of the second UE and the second verification information of the second UE to an LMF.

A newly added identifier for the second UE is used as the second verification information of the second UE. Therefore, the LMF cannot determine the second verification information of the second UE based on the identifier of the second UE. Based on this, the AMF needs to additionally send the second verification information of the second UE to the LMF.

In this way, the AMF may send a request including the identifier of the second UE and the second verification information of the second UE to the LMF, so that the LMF can learn that the location information of the second UE needs to be determined.

The LMF may include the identifier of the second UE and the second verification information of the second UE in a request 14, and send the request 14 to the AMF, where the request 14 is used to request a related positioning parameter of the second UE. A specific implementation of the request 14 is not limited in this application.

S903: The LMF sends, to the AMF, a request for obtaining the related positioning parameter of the second UE or sending the location information of the second UE, where the request includes the identifier of the second UE and first verification information of the second UE.

Based on the descriptions of S902, the AMF sends the second verification information of the second UE to the LMF. Therefore, the LMF also needs to additionally send the first verification information of the second UE to the AMF.

In this way, the LMF may send, to the AMF, the request including the identifier of the second UE and the first verification information of the second UE, that is, the request in S701, so that the AMF can learn that the related positioning parameter of the second UE needs to be obtained from the second UE.

S904: The AMF obtains the first verification information of the second UE, and obtains the second verification information of the second UE from the AMF based on the identifier of the second UE.

Based on the descriptions of S903, the AMF may obtain the identifier of the second UE and the first verification information of the second UE.

In this way, the AMF may determine the first verification information of the second UE. In addition, when the status identifier or the random number of the second UE is used as verification information of a UE, the AMF may determine the second UE based on the identifier of the second UE, and the AMF may determine the second verification information of the second UE from the AMF for the second UE.

S905: When the first verification information of the second UE is the same as the second verification information of the second UE, the AMF sends the related positioning parameter of the second UE or the location information of the second UE.

When the first verification information of the second UE is the same as the second verification information of the second UE, the AMF may send the related positioning parameter of the UE to the LMF or send the location information of the second UE to the GMLC.

In this application, the AMF may determine, by checking whether the first verification information of the second UE is the same as the second verification information of the second UE, whether the LMF has a malicious behavior of unauthorizedly requesting the related positioning parameter of the second UE or unauthorizedly forwarding the location information of the second UE, so that after the LMF is attacked, subsequent forwarding of the location information of the UE by the AMF to the LMF is intercepted in advance, thereby reducing a possibility of disclosing the location information of the second UE.

For example, this application further provides an information sending apparatus. The information sending apparatus may exist independently, or may be integrated into another device, and may provide information corresponding to a location of a UE to a location request device, to implement an operation corresponding to the first device/LMF in any one of the foregoing method embodiments.

The information sending apparatus in this application may include modules configured to perform the technical solutions in the foregoing method embodiments, and implementation principles and technical effects thereof are similar. For an operation implemented by each module, further refer to related descriptions in the method embodiments. Details are not described herein again. The module herein may be replaced with a component or a circuit.

In this application, the information sending apparatus may be divided into functional modules based on the foregoing method examples. For example, the functional modules may be obtained through division based on functions, and two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

For example, this application further provides an information sending apparatus.

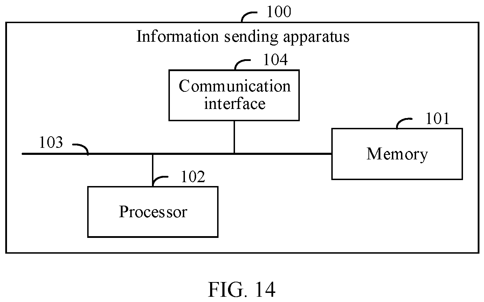

FIG. 14 is a diagram of a hardware structure of an information sending apparatus according to an embodiment of this application.

As shown in FIG. 14, as hardware support of a first device/an LMF, an information sending apparatus 100 may provide information corresponding to a location of a UE to a location request device, to implement an operation corresponding to the first device/LMF in any one of the foregoing method embodiments.

The information sending apparatus 100 in this application may include a memory 101 and a processor 102. The memory 101 and the processor 102 may be connected through a bus 103. Optionally, the processor 102 and the memory 101 are integrated together.

The memory 101 is configured to store program code.

The processor 102 invokes the program code, and is configured to perform the information sending method in any one of the foregoing embodiments when the program code is executed. For details, refer to related descriptions in the foregoing method embodiments.

Optionally, this application further includes a communication interface 104. The communication interface 104 may be connected to the processor 102 through the bus 103. The processor 102 may control the communication interface 104 to implement the foregoing receiving and sending functions of the information sending apparatus 100.

The information sending apparatus in this embodiment of this application may be configured to implement the technical solutions in the foregoing method embodiments. Implementation principles and technical effects thereof are similar, and details are not described herein again.

For example, this application further provides a communication system. The communication system includes two or more network elements in the foregoing LCS system. Each network element may be configured to implement an operation corresponding to the first device/LMF in any one of the foregoing method embodiments.

For example, this application further provides a computer-readable storage medium. The computer-readable storage medium stores executable instructions. When at least one processor of a server executes the executable instructions, the server performs the information sending method in the foregoing method embodiments.

For example, this application further provides a chip, including: an interface circuit and a logic circuit, where the interface circuit is configured to receive a signal from another chip other than the chip and transmit the signal to the logic circuit, or send a signal from the logic circuit to another chip other than the chip, and the logic circuit is configured to implement the information sending method in the foregoing method embodiments.

For example, this application further provides a computer program product. The computer program product includes executable instructions, and the executable instructions are stored in a readable storage medium. At least one processor of a server may read the executable instructions from the readable storage medium, and the at least one processor executes the executable instructions to enable the server to perform the information sending method in the foregoing method embodiments.

A person of ordinary skill in the art may understand that all or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When computer program instructions are loaded and executed on a computer, all or some of the procedures or functions according to embodiments of this application are generated. The computer may be a general-purpose computer, a dedicated computer, a computer network, or another programmable apparatus. The one or more computer instructions may be stored in a computer-readable storage medium or may be transmitted from a computer-readable storage medium to another computer-readable storage medium. For example, the one or more computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, DVD), a semiconductor medium (for example, a solid-state disk Solid State Disk (SSD)), or the like.

## Claims

1. An information sending method, wherein the method comprises:
receiving, by a first device, an identifier of a first terminal device;
obtaining, by the first device, first location service information, wherein the first location service information can indicate a terminal device whose location can be provided; and
after determining, based on the first location service information and the identifier of the first terminal device, that a location of the first terminal device can be provided, sending, by the first device, information corresponding to the location of the first terminal device.

2. The method according to claim 1, wherein the first device is an access and mobility management function entity;
the receiving, by a first device, an identifier of a first terminal device comprises: receiving, by the access and mobility management function entity, the identifier of the first terminal device from a gateway mobile location center; and
the sending, by the first device, information corresponding to the location of the first terminal device comprises: sending, by the access and mobility management function entity, location information of the first terminal device to the gateway mobile location center.

3. The method according to claim 1, wherein the first device is a unified data management entity;
the receiving, by a first device, an identifier of a first terminal device comprises: receiving, by the unified data management entity, the identifier of the first terminal device from a gateway mobile location center; and
the sending, by the first device, information corresponding to the location of the first terminal device comprises: sending, by the unified data management entity to the gateway mobile location center, information about an access and mobility management function entity serving the first terminal device, wherein the information about the access and mobility management function entity serving the first terminal device is used by the gateway mobile location center to request location information of the first terminal device.

4. The method according to claim 2 or 3, wherein the obtaining, by the first device, first location service information comprises:
obtaining, by the first device based on the gateway mobile location center and a preconfigured correspondence between each gateway mobile location center and corresponding location service information, the first location service information corresponding to the gateway mobile location center; or
obtaining, by the first device, the first location service information from a certificate of the gateway mobile location center; or
obtaining, by the first device, the first location service information from an access token of the gateway mobile location center; or
receiving, by the first device, the first location service information from the gateway mobile location center.

5. The method according to claim 1, wherein the first device is a gateway mobile location center;
the receiving, by a first device, an identifier of a first terminal device comprises: receiving, by the gateway mobile location center, the identifier of the first terminal device from a location request device; and
the sending, by the first device, information corresponding to the location of the terminal device comprises: sending, by the gateway mobile location center, location information of the first terminal device to the location request device.

6. The method according to claim 5, wherein the obtaining, by the first device, first location service information comprises:
obtaining, by the gateway mobile location center based on the gateway mobile location center and a preconfigured correspondence between each gateway mobile location center and corresponding location service information, the first location service information corresponding to the gateway mobile location center; or
obtaining, by the gateway mobile location center, the first location service information from a certificate of the location request device; or
receiving, by the gateway mobile location center, the first location service information from the location request device.

7. The method according to any one of claims 1 to 6, wherein
the first location service information corresponds to a terminal device identifier set, and the terminal device identifier set comprises an identifier of a terminal device whose location can be provided; and
the terminal device identifier set comprises the identifier of the first terminal device.

8. The method according to claim 7, wherein
the terminal device identifier set is obtained based on the first location service information and a preconfigured matching relationship between location service information and a corresponding terminal device identifier set; or
the terminal device identifier set is obtained from the access token of the gateway mobile location center corresponding to the first location service information.

9. The method according to any one of claims 1 to 6, wherein
the first location service information corresponds to a first location service identifier, and the first location service identifier identifies a location service region that corresponds to the first device and in which a location of a terminal device can be provided;
the method further comprises:
obtaining, by the first device, a second location service identifier from subscription information of the first terminal device based on the identifier of the first terminal device, wherein the second location service identifier identifies a location service region in which the location of the first terminal device can be provided; and
the determining, by the first device based on the first location service information and the identifier of the first terminal device, that a location of the first terminal device can be provided comprises:
when the first location service identifier is the same as the second location service identifier, determining, by the first device, that the location of the first terminal device can be provided.

10. An information sending method, wherein the method comprises:
receiving, by a unified data management entity, an identifier of a first terminal device from a gateway mobile location center or an access and mobility management function entity;
determining, by the unified data management entity, subscription information of the first terminal device based on the identifier of the first terminal device;
obtaining, by the unified data management entity, a second location service identifier from the subscription information of the first terminal device, wherein the second location service identifier identifies a location service region in which a location of the first terminal device can be provided; and
sending, by the unified data management entity, the second location service identifier to the gateway mobile location center or the access and mobility management function entity.

11. An information sending method, wherein the method comprises:
receiving, by a network repository function entity from a gateway mobile location center, a request for applying for an access token of the gateway mobile location center;
obtaining, by the network repository function entity, first location service information, wherein the first location service information can indicate a terminal device whose location can be provided; and
sending, by the network repository function entity, the access token of the gateway mobile location center to the gateway mobile location center, wherein the access token of the gateway mobile location center comprises the first location service information.

12. The method according to claim 11, wherein the obtaining, by the network repository function entity, first location service information comprises:
obtaining, by the network repository function entity, the first location service information from a certificate of the gateway mobile location center; or
obtaining, by the network repository function entity, the first location service information from a registration profile of the gateway mobile location center; or
receiving, by the network repository function entity, the first location service information from the gateway mobile location center.

13. The method according to claim 11 or 12, wherein before the obtaining, by the network repository function entity, first location service information, the method further comprises:
receiving, by the network repository function entity from the gateway mobile location center, a request for registering the gateway mobile location center;
obtaining, by the network repository function entity, second location service information, wherein the second location service information can indicate a terminal device whose location can be provided; and
writing, by the network repository function entity, the second location service information into the registration profile of the gateway mobile location center.

14. The method according to claim 13, wherein the obtaining, by the network repository function entity, second location service information comprises:
receiving, by the network repository function entity, the second location service information from the gateway mobile location center; or
obtaining, by the network repository function entity, the second location service information from the certificate of the gateway mobile location center.

15. The method according to any one of claims 11 to 14, wherein
the first location service information corresponds to a terminal device identifier set, the terminal device identifier set comprises an identifier of a terminal device whose location can be provided, and the access token of the gateway mobile location center comprises the terminal device identifier set; and/or
the first location service information corresponds to a first location service identifier, the first location service identifier identifies a location service region that corresponds to the first device and in which a location of a terminal device can be provided, and the access token of the gateway mobile location center comprises the first location service identifier.

16. An information sending method, wherein the method comprises:
sending, by either a gateway mobile location center or a location request device, an identifier of a first terminal device to a first device;
receiving, by the first device, the identifier of the first terminal device;
obtaining, by the first device, first location service information, wherein the first location service information can indicate a terminal device whose location can be provided;
after determining, based on the first location service information and the identifier of the first terminal device, that a location of the first terminal device can be provided, sending, by the first device to either the gateway mobile location center or the location request device, information corresponding to the location of the first terminal device; and
receiving, by either the gateway mobile location center or the location request device, the information corresponding to the location of the first terminal device.

17. The method according to claim 16, wherein the first device is an access and mobility management function entity;
the receiving, by the first device, the identifier of the first terminal device comprises: receiving, by the access and mobility management function entity, the identifier of the first terminal device from the gateway mobile location center; and
the sending, by the first device to either the gateway mobile location center or the location request device, information corresponding to the location of the first terminal device comprises: sending, by the access and mobility management function entity, location information of the first terminal device to the gateway mobile location center.

18. The method according to claim 16, wherein the first device is a unified data management entity;
the receiving, by the first device, the identifier of the first terminal device comprises: receiving, by the unified data management entity, the identifier of the first terminal device from the gateway mobile location center; and
the sending, by the first device to either the gateway mobile location center or the location request device, information corresponding to the location of the first terminal device comprises: sending, by the unified data management entity to the gateway mobile location center, information about an access and mobility management function entity serving the first terminal device, wherein the information about the access and mobility management function entity serving the first terminal device is used by the gateway mobile location center to request location information of the first terminal device.

19. The method according to claim 17 or 18, wherein the obtaining, by the first device, first location service information comprises:
obtaining, by the first device based on the gateway mobile location center and a preconfigured correspondence between each gateway mobile location center and corresponding location service information, the first location service information corresponding to the gateway mobile location center; or
obtaining, by the first device, the first location service information from a certificate of the gateway mobile location center; or
obtaining, by the first device, the first location service information from an access token of the gateway mobile location center; or
receiving, by the first device, the first location service information from the gateway mobile location center.

20. The method according to claim 16, wherein the first device is the gateway mobile location center;
the receiving, by the first device, the identifier of the first terminal device comprises: receiving, by the gateway mobile location center, the identifier of the first terminal device from the location request device; and
the sending, by the first device to either the gateway mobile location center or the location request device, information corresponding to the location of the first terminal device comprises: sending, by the gateway mobile location center, location information of the first terminal device to the location request device.

21. The method according to claim 20, wherein the obtaining, by the first device, first location service information comprises:
obtaining, by the gateway mobile location center based on the gateway mobile location center and a preconfigured correspondence between each gateway mobile location center and corresponding location service information, the first location service information corresponding to the gateway mobile location center; or
obtaining, by the gateway mobile location center, the first location service information from a certificate of the location request device; or
receiving, by the gateway mobile location center, the first location service information from the location request device.

22. The method according to any one of claims 16 to 21, wherein
the first location service information corresponds to a terminal device identifier set, and the terminal device identifier set comprises an identifier of a terminal device whose location can be provided; and
the terminal device identifier set comprises the identifier of the first terminal device.

23. The method according to claim 22, wherein
the terminal device identifier set is obtained based on the first location service information and a preconfigured matching relationship between location service information and a corresponding terminal device identifier set; or
the terminal device identifier set is obtained from the access token of the gateway mobile location center corresponding to the first location service information.

24. The method according to any one of claims 16 to 21, wherein
the first location service information corresponds to a first location service identifier, and the first location service identifier identifies a location service region that corresponds to the first device and in which a location of a terminal device can be provided;
the method further comprises:
obtaining, by the first device, a second location service identifier from subscription information of the first terminal device based on the identifier of the first terminal device, wherein the second location service identifier identifies a location service region in which the location of the first terminal device can be provided; and
the determining, by the first device based on the first location service information and the identifier of the first terminal device, that a location of the first terminal device can be provided comprises:
when the first location service identifier is the same as the second location service identifier, determining, by the first device, that the location of the first terminal device can be provided.

25. An information sending apparatus, used in a first device, wherein the apparatus comprises:
a receiving unit, configured to receive an identifier of a first terminal device;
a processing unit, configured to obtain first location service information, wherein the first location service information can indicate a terminal device whose location can be provided; and
a sending unit, configured to: after the processing unit determines, based on the first location service information and the identifier of the first terminal device, that a location of the first terminal device can be provided, send information corresponding to the location of the first terminal device.

26. The apparatus according to claim 25, wherein the first device is an access and mobility management function entity;
the receiving unit is specifically configured to receive the identifier of the first terminal device from a gateway mobile location center; and
the sending unit is specifically configured to send location information of the first terminal device to the gateway mobile location center.

27. The apparatus according to claim 25, wherein the first device is a unified data management entity;
the receiving unit is specifically configured to receive the identifier of the first terminal device from a gateway mobile location center; and
the sending unit is specifically configured to send, to the gateway mobile location center, information about an access and mobility management function entity serving the first terminal device, wherein the information about the access and mobility management function entity serving the first terminal device is used by the gateway mobile location center to request location information of the first terminal device.

28. The apparatus according to claim 26 or 27, wherein the processing unit is specifically configured to:
obtain, based on the gateway mobile location center and a preconfigured correspondence between each gateway mobile location center and corresponding location service information, the first location service information corresponding to the gateway mobile location center; or
obtain the first location service information from a certificate of the gateway mobile location center; or
obtain the first location service information from an access token of the gateway mobile location center; or
receive the first location service information from the gateway mobile location center.

29. The apparatus according to claim 25, wherein the first device is a gateway mobile location center;
the receiving unit is specifically configured to receive the identifier of the first terminal device from a location request device; and
the sending unit is specifically configured to send location information of the first terminal device to the location request device.

30. The apparatus according to claim 29, wherein the processing unit is specifically configured to:
obtain, based on the gateway mobile location center and a preconfigured correspondence between each gateway mobile location center and corresponding location service information, the first location service information corresponding to the gateway mobile location center; or
obtain the first location service information from a certificate of the location request device; or
receive the first location service information from the location request device.

31. The apparatus according to any one of claims 25 to 30, wherein the first location service information corresponds to a terminal device identifier set, and the terminal device identifier set comprises an identifier of a terminal device whose location can be provided; and
the terminal device identifier set comprises the identifier of the first terminal device.

32. The apparatus according to claim 31, wherein
the terminal device identifier set is obtained based on the first location service information and a preconfigured matching relationship between location service information and a corresponding terminal device identifier set; or
the terminal device identifier set is obtained from the access token of the gateway mobile location center corresponding to the first location service information.

33. The apparatus according to any one of claims 25 to 30, wherein
the first location service information corresponds to a first location service identifier, and the first location service identifier identifies a location service region that corresponds to the first device and in which a location of a terminal device can be provided;
the processing unit is further configured to obtain a second location service identifier from subscription information of the first terminal device based on the identifier of the first terminal device, wherein the second location service identifier identifies a location service region in which the location of the first terminal device can be provided; and
the processing unit is further configured to: when the first location service identifier is the same as the second location service identifier, determine that the location of the first terminal device can be provided.

34. An information sending apparatus, used in a unified data management entity, wherein the apparatus comprises:
a receiving unit, configured to receive an identifier of a first terminal device from a gateway mobile location center or an access and mobility management function entity;
a processing unit, configured to determine subscription information of the first terminal device based on the identifier of the first terminal device, wherein
the processing unit is further configured to obtain a second location service identifier from the subscription information of the first terminal device, wherein the second location service identifier identifies a location service region in which a location of the first terminal device can be provided; and
a sending unit, configured to send the second location service identifier to the gateway mobile location center or the access and mobility management function entity.

35. An information sending apparatus, used in a network repository function entity, wherein the apparatus comprises:
a receiving unit, configured to receive, from a gateway mobile location center, a request for applying for an access token of the gateway mobile location center;
a processing unit, configured to obtain first location service information, wherein the first location service information can indicate a terminal device whose location can be provided; and
a sending unit, configured to send the access token of the gateway mobile location center to the gateway mobile location center, wherein the access token of the gateway mobile location center comprises the first location service information.

36. The apparatus according to claim 35, wherein the processing unit is specifically configured to:
obtain the first location service information from a certificate of the gateway mobile location center; or
obtain the first location service information from a registration profile of the gateway mobile location center; or
receive the first location service information from the gateway mobile location center.

37. The apparatus according to claim 35 or 36, wherein before the processing unit obtains the first location service information,
the receiving unit is further configured to receive, from the gateway mobile location center, a request for registering the gateway mobile location center;
the processing unit is further configured to obtain second location service information, wherein the second location service information can indicate a terminal device whose location can be provided; and
the processing unit is further configured to write the second location service information into the registration profile of the gateway mobile location center.

38. The apparatus according to claim 37, wherein the processing unit is specifically configured to:
receive the second location service information from the gateway mobile location center; or
obtain the second location service information from the certificate of the gateway mobile location center.

39. The apparatus according to any one of claims 35 to 38, wherein
the first location service information corresponds to a terminal device identifier set, the terminal device identifier set comprises an identifier of a terminal device whose location can be provided, and the access token of the gateway mobile location center comprises the terminal device identifier set; and/or
the first location service information corresponds to a first location service identifier, the first location service identifier identifies a location service region that corresponds to the first device and in which a location of a terminal device can be provided, and the access token of the gateway mobile location center comprises the first location service identifier.

40. The method according to any one of claims 1 to 15 or the apparatus according to any one of claims 25 to 39, wherein the first location service information identifies at least one of the following: a home region of the gateway mobile location center, a network service region of the gateway mobile location center, a home operator of the gateway mobile location center, a home enterprise of the gateway mobile location center, a home region of a terminal device, a home enterprise of the terminal device, a service application of the terminal device, or an access network area of the terminal device.

41. The method or apparatus according to claim 40, wherein the first location service information comprises at least one of the following: an edge region identifier of the gateway mobile location center, an identifier of the gateway mobile location center, an instance identifier of the gateway mobile location center, an internet protocol address of the gateway mobile location center, a network port of the gateway mobile location center, an identifier of the access and mobility management function entity/unified data management entity, an identifier of a terminal device, an application identifier of the terminal device, an application function entity identifier, an application server identifier, a client identifier of the terminal device, a region identifier subscribed to by the terminal device with a home operator, a region identifier registered by the terminal device, a home enterprise identifier of the terminal device, an identifier of a network slice accessed by the terminal device, a tracking area identifier of the terminal device, an identifier of a cell region accessed by the terminal device, or geographic location information of the terminal device.

42. An information sending system, wherein the system comprises the information sending apparatus according to any one of claims 25 to 33, and at least one of a gateway mobile location center and a location request device, and either the gateway mobile location center or the location request device is configured to send an identifier of a first terminal device to the information sending apparatus, and receive information corresponding to a location of the first terminal device.
